(19) Europäisches Patentamt

European Patent Office

Office européen des brevets

(11) **EP 4 589 800 A1**

(12) **EUROPEAN PATENT APPLICATION**

(43) Date of publication:
**23.07.2025 Bulletin 2025/30**

(21) Application number: **24157298.1**

(22) Date of filing: **13.02.2024**

(51) International Patent Classification (IPC):
*H02J 3/00* (2006.01)     *H02J 3/38* (2006.01)
*H02J 13/00* (2006.01)

(52) Cooperative Patent Classification (CPC):
**H02J 3/0012; H02J 3/004;** H02J 3/388;
H02J 2203/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.01.2024 US 202463622002 P**

(71) Applicant: **Hitachi Energy Ltd**
**8050 Zürich (CH)**

(72) Inventors:
• **Shirsat, Ashwin**
**Apex, NC 27502 (US)**
• **Kar, Jishnudeep**
**Raleigh 27606 (US)**
• **Knezovic, Katarina**
**8006 Zürich (CH)**
• **Peter, Lena**
**67063 Ludwigshafen am Rhein (DE)**
• **Schoenleber, Kevin**
**69198 Schriesheim (DE)**
• **Subasic, Milos**
**68161 Mannheim (DE)**

(74) Representative: **Vossius & Partner
Patentanwälte Rechtsanwälte mbB
Siebertstrasse 3
81675 München (DE)**

(54) **COMPUTATION OF PREEMPTIVE RANKED RESILIENCY MEASURES USING PROBABILISTIC OPTIMIZATION FOR ENHANCED OPERATIONAL RESILIENCE OF A POWER SYSTEM**

(57)     When an extreme weather event is forecast, an operator of a power system will typically prepare reactive measures, to facilitate the restoration of the power system after it has been damaged by the event. Disclosed embodiments utilize probabilistic optimization to identify and rank resiliency measures in advance of such an event, such that proactive measures may be implemented before the event, to increase the operational resilience of the power system during the event. This enables the power system to better withstand and recover more quickly from the event, thereby reducing downtime (e.g., power outages) and costs. Exemplary resiliency measures include, without limitation, load curtailment, network topology optimization, preemptive electrical islanding, and distributed energy resource (DER) dispatch.

**FIG. 1**

**Description**

BACKGROUND

Field of the Invention

The embodiments described herein are generally directed to the optimization of a power system, and, more particularly, to computing preemptive ranked resiliency measures using probabilistic optimization for enhanced operational resilience of a power system.

Description of the Related Art

Extreme weather events, such as storms, hurricanes, floods, wildfires, and the like, are among the major causes of power outages worldwide. Due to the climate crisis, extreme weather events continue to grow in severity, frequency, and duration. Currently, these events are estimated to cost 20-55 billion USD annually.

Typically, a utility will monitor the weather forecast and, when a severe weather event is forecasted, try to estimate the potential damage to its power system. The utility will then use this information to begin preparing for potential power outages. Such preparation generally includes assessing inventory, procuring hardware resources, scheduling repair crews, scheduling assistance (e.g., sourcing equipment) from neighboring utilities, and/or the like. However, even when performed before the weather event, these are still reactive measures, since they are preparations for repairing the damage to the power grid during or after the event.

Traditional preparations are not proactive or defensive. In other words, traditional preparations for weather events do not prepare or harden the power grid to absorb the impact of the event, for example, by eliminating or mitigating the impact of damage to the power grid in the first place. Proactive preparedness would improve the operational resilience of the power grid, which is defined as the ability to withstand high-impact, low-frequency events by absorbing, adapting, and quickly recovering from the damaging impacts of such events. However, proactive preparedness comes with high uncertainty, which makes it complicated to accurately capture the impact of extreme weather events.

SUMMARY

Accordingly, systems, methods, and non-transitory computer-readable media are disclosed for computing preemptive ranked resiliency measures using probabilistic optimization for enhanced operational resilience of a power system.

In an embodiment, a method comprises using at least one hardware processor to: acquire asset data associated with a plurality of power-delivery assets of a power network; acquire forecast data associated with at least one future event; generate input data based on the asset data and the forecast data; and in advance of the at least one future event, input the input data to a probabilistic optimization model that optimizes at least one parameter of an operation of the power network for the at least one future event, for each of a plurality of resiliency measures, determine a measure of effectiveness of the resiliency measure, on the operation of the power network for the at least one future event, based on a solution to the probabilistic optimization model, and output the measures of effectiveness for the plurality of resiliency measures to a network controller of the power network, wherein the probabilistic optimization model models a topology of the power network, wherein the solution to the probabilistic optimization model comprises an optimized network topology, and wherein the plurality of resiliency measures comprises reconfiguring the power network to the optimized network topology.

The method may further comprise using the at least one hardware processor to: determine to implement the optimized network topology; and control the power network to reconfigure the power network to the optimized network topology, such that the power network has the optimized network topology during the at least one future event.

Controlling the power network may comprise controlling one or more switches in the power network.

The method may further comprise using the at least one hardware processor to, prior to outputting the measures of effectiveness, rank the plurality of resiliency measures according to the measures of effectiveness for the plurality of resiliency measures.

The measure of effectiveness for each of the plurality of resiliency measures may be based on one or both: an expected improvement in the operation of the power network during the at least one future event if the resiliency measure is implemented; or an ease of implementing the resiliency measure.

The plurality of resiliency measures may comprise load curtailment. The asset data may comprise criticality information that indicates a criticality of one or more loads of the power network. The method may further comprise using the at least one hardware processor to: determine to implement the load curtailment; and control the power network to curtail power supplied to at least one load of the power network during the at least one future event.

The probabilistic optimization model may model electrical islanding within the power network, the solution to the probabilistic optimization model may comprise one or more electrical islands within the power network, and the plurality of resiliency measures may comprise preemptive electrical islanding.

The solution to the probabilistic optimization model may comprise a microgrid configuration that includes a plurality of microgrids that each has at least one grid-forming distributed energy resource, and the method may further comprise using the at least one hardware processor to: determine to implement the preemptive electrical islanding; and control one or more switches in the power network to split the power network into the plurality of microgrids.

The probabilistic optimization model may model dispatch of energy resources within the power network, the solution to the probabilistic optimization model may comprise a dispatch of each of one or more energy resources within the power network, and the plurality of resiliency measures may comprise dispatching the one or more energy resources.

The asset data may comprise one or more parameters of each of one or more of the plurality of power-delivery assets, and indicate connections between the plurality of power-delivery assets.

The forecast data may comprise a forecast of load on the power network during the at least one future event.

The input data may comprise a plurality of failure scenarios for the plurality of power-delivery assets during the at least one future event. The asset data may comprise failure probabilities for the plurality of power-delivery assets, and the method may further comprise using the at least one hardware processor to generate the plurality of failure scenarios based on the failure probabilities.

The input data may comprise a plurality of failure probability distributions for the plurality of power-delivery assets.

The at least one future event may comprise a weather event, and the forecast data may comprise a weather forecast for a time period of the at least one future event.

The power network may comprise a distribution network.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processor-based system, such as a server, and/or in executable instructions stored in a non-transitory computer-readable medium.

BRIEF DESCRIPTION OF THE DRAWINGS

The details of the present invention, both as to its structure and operation, may be gleaned in part by study of the accompanying drawings, in which like reference numerals refer to like parts, and in which:

FIG. 1 illustrates an example infrastructure, in which any of the processes described herein may be implemented, according to an embodiment;
FIG. 2 illustrates an example processing system, by which any of the processes described herein may be executed, according to an embodiment;
FIG. 3 illustrates an example data flow for probabilistic optimization, according to an embodiment;
FIG. 4 illustrates an example process for probabilistic optimization, according to an embodiment;
FIG. 5 illustrates an example process for calculating a measure of effectiveness for a resiliency measure, according to an embodiment;
FIG. 6 illustrates an architecture for probabilistic optimization of load curtailment, according to an embodiment;
FIG. 7 illustrates an architecture for probabilistic optimization of network topology, according to an embodiment;
FIG. 8 illustrates an example of microgrid formation in preemptive electrical islanding, according to an embodiment;
FIG. 9 illustrates an architecture for probabilistic preemptive electrical islanding, according to an embodiment;
FIG. 10 illustrates an architecture for probabilistic DER dispatch, according to an embodiment; and
FIGS. 11A and 11B illustrate network plots of a circuit that was used to test an exemplary implementation of disclosed embodiments.

DETAILED DESCRIPTION

In an embodiment, systems, methods, and non-transitory computer-readable media are disclosed for computing preemptive ranked resiliency measures using probabilistic optimization for enhanced operational resilience of a power system. After reading this description, it will become apparent to one skilled in the art how to implement the invention in various alternative embodiments and alternative applications. However, although various embodiments of the present invention will be described herein, it is understood that these embodiments are presented by way of example and illustration only, and not limitation. As such, this detailed description of various embodiments should not be construed to limit the scope or breadth of the present invention as set forth in the appended claims.

1. Infrastructure

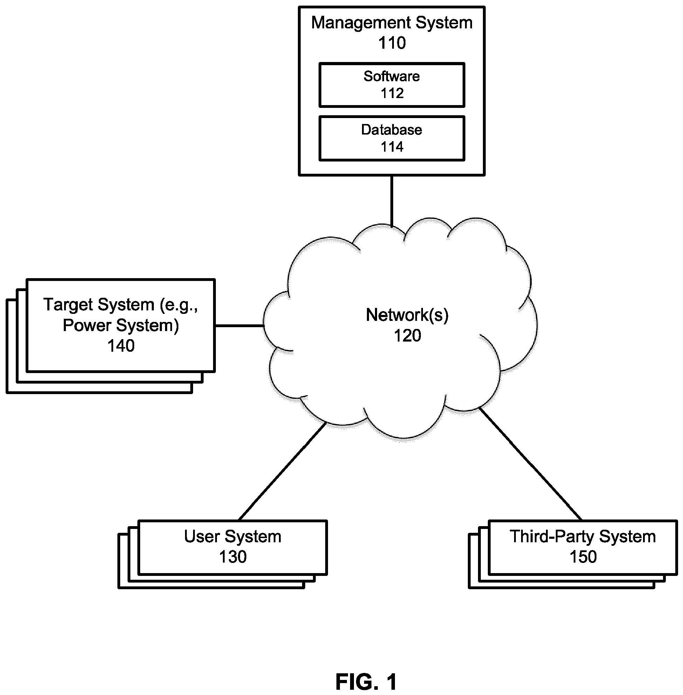

FIG. 1 illustrates an example infrastructure, in which any of the disclosed processes may be implemented, according to an embodiment. The infrastructure may comprise a management system 110 (e.g., comprising one or more servers) that hosts and/or executes one or more of the various processes described herein, which may be implemented in software and/or hardware. Examples of management system 110 include, without limitation, a supervisory control and data acquisition (SCADA) system, a power management system (PMS), an energy management system (EMS), a distribution management system (DMS), an advanced DMS (ADMS), an asset management system (ASM), and/or the like. Management system 110 may comprise dedicated servers, or may instead be implemented in a computing cloud, in which the computational resources of one or more servers are dynamically and elastically allocated to multiple tenants based on demand. In either case, the servers may be collocated (e.g., in a single data center) and/or geographically distributed (e.g., across a plurality of data centers). Management system 110 may also comprise or be communicatively connected to software 112 and/or a database 114. In addition, management system 110 may be communicatively connected, via one or more networks 120, to one or more user systems 130, target systems 140, and/or third-party systems 150.

Network(s) 120 may comprise the Internet, and management system 110 may communicate with user system(s) 130, target system(s) 140, and/or third-party system(s) 150, through the Internet and/or other network using standard transmission protocols, such as HyperText Transfer Protocol (HTTP), HTTP Secure (HTTPS), File Transfer Protocol (FTP), FTP Secure (FTPS), Secure Shell FTP (SFTP), eXtensible Messaging and Presence Protocol (XMPP), Open Field Message Bus (OpenFMB), Institute of Electrical and Electronics Engineers (IEEE) Smart Energy Profile Application Protocol (IEEE 2030.5), and the like, as well as proprietary protocols. While management system 110 is illustrated as being connected to various systems through a single set of network(s) 120, it should be understood that management system 110 may be connected to the various systems via different sets of one or more networks. For example, management system 110 may be connected to a subset of user systems 130, target systems 140, and/or third-party systems 150 via the Internet, but may be connected to one or more other user systems 130, target systems 140, and/or third-party systems 150 via an intranet. Furthermore, while only a few user systems 130, target systems 140, and third-party systems 150, one instance of software 112, and one database 114 are illustrated, it should be understood that the infrastructure may comprise any number of user systems 130, target systems 140, third-party systems 150, software instances 112, and databases 114.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, embedded controllers, programmable logic controllers (PLCs), and/or the like. However, it is generally contemplated that user system(s) 130 would comprise personal computers, mobile devices, or workstations by which agents of an operator (e.g., utility) of a target system 140 can interact with management system 110. These interactions may comprise inputting data (e.g., parameters for configuring the processes described herein) and/or receiving data (e.g., the outputs of processes described herein) via a graphical user interface provided by management system 110 or a system between management system 110 and user system(s) 130. The graphical user interface may comprise screens (e.g., webpages) that include a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like, including elements comprising or derived from data stored in database 114.

Target system(s) 140 may comprise any type of system for which data, related to one or more assets, are monitored, analyzed, and/or acted upon. However, in the context of specific, non-limiting examples that are provided throughout the present disclosure, it will be assumed that target system 140 comprises or consists of a power system. A power system may comprise one or more, and generally a plurality of, power-delivery assets connected in a network, which may comprise a distribution network (e.g., balanced or unbalanced), a transmission network, and/or the like. The assets may comprise power resources, such as power generators, energy storage systems, electrical loads (e.g., rechargeable energy storage system or other controllable load, non-controllable load, etc.), and/or the like, as well as other types of power-delivery assets, such as transformers, inverters, branches or other power lines (e.g., overhead or underground power lines), poles on which power lines are mounted, capacitor banks, voltage regulators, switches, fuses, reclosers, and/or any other component supporting the power system. Power generators may comprise different types of power generators, such as thermal power plants (e.g., coal, natural gas, nuclear, geothermal, etc.), hydroelectric power plants, renewable-resource power plants (e.g., photovoltaic, wind, geothermal, etc.), diesel generators, and/or the like, and may be stationary or mobile. Electrical loads may comprise anything that consumes power, including, without limitation, electric vehicles, appliances, machines, commercial buildings, residential buildings, hospitals, police stations, fire stations, gas network pumps, water systems, and/or the like.

Third-party system(s) 150 may comprise any type or types of computing devices capable of wired and/or wireless communication. However, it is generally contemplated that third-party system 150 would comprise one or more servers that supply extrinsic data to management system 100. The extrinsic data may represent historical, current, and/or forecasted values of one or more parameters, relevant to target system 140, such as weather parameters (e.g., temperature, humidity, wind speed, pressure, etc.), market parameters (e.g., energy prices), socio-political events (e.g., protests, law-enforcement warnings, etc.) and/or the like.

Management system 110 may execute software 112, comprising one or more software modules that implement one or more of the disclosed processes. In addition, management system 110 may comprise, be communicatively coupled with, or otherwise have access to database 114 that stores the data input into and/or output from one or more of the disclosed processes. Any suitable database may be utilized in database 114, including without limitation MySQL™, Oracle™, IBM™, Microsoft SQL™, Access™, PostgreSQL™, MongoDB™, and/or the like, and including cloud-based databases, proprietary databases, and unstructured databases.

2. Example Processing System

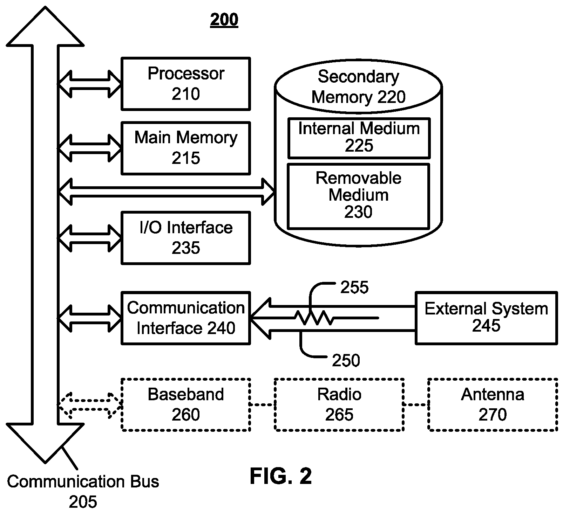

FIG. 2 illustrates an example processing system 200, by which any of the processes described herein may be executed, according to an embodiment. For example, system 200 may be used as or in conjunction with one or more of the functions, methods, or software (e.g., to store and/or execute software 112, store database 114, etc.) described herein, and may represent components of management system 110, user system(s) 130, target system(s) 140, third-party system(s) 150, and/or other processing devices described herein. System 200 can be a server, conventional personal computer, or any other processor-enabled device that is capable of wired or wireless data communication. Other computer systems and/or architectures may be also used, as will be clear to those skilled in the art.

System 200 preferably includes one or more processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digital-signal processor), a processor subordinate to the main processor (e.g., back-end processor), an additional microprocessor or controller for dual or multiple processor systems, and/or a coprocessor. Such auxiliary processors may be discrete processors or may be integrated with a main processor. Examples of processors 210 which may be used with system 200 include, without limitation, any of the processors (e.g., Pentium™, Core i7™, Xeon™, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos™) available from Samsung Electronics Co., Ltd., of Seoul, South Korea, any of the processors available from NXP Semiconductors N.V. of Eindhoven, Netherlands, and/or the like.

Processor 210 may be connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE), including IEEE 488 general-purpose interface bus (GPIB) or IEEE 696/S-100, and/or the like.

System 200 may comprise a main memory 215. Main memory 215 provides storage of instructions and data for programs executing on processor 210, such as one or more of the processes discussed herein (e.g., embodied in software 112). It should be understood that programs stored in the memory and executed by processor 210 may be written and/or compiled according to any suitable language, including without limitation C/C++, Java, JavaScript, Perl, Python, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

System 200 may also comprise a secondary memory 220. Secondary memory 220 may optionally include an internal medium 225 and/or a removable medium 230. Internal medium 225 may comprise, for example, a hard disk drive (HDD), a solid state drive (SSD), and/or the like. Removable medium 230 may comprise, for example, a magnetic tape drive, a compact disc (CD) drive, a digital versatile disc (DVD) drive, a flash memory drive, and/or the like. Secondary memory 220 is a non-transitory computer-readable medium having computer-executable code (e.g., software 112) and/or other data stored thereon. The computer software or data stored on secondary memory 220 is read into main memory 215 for execution by processor 210.

System 200 may comprise an input/output (I/O) interface 235. I/O interface 235 provides an interface between one or more components of system 200 and one or more input and/or output devices. Examples of input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing devices, cathode ray tubes (CRTs), plasma displays, light-emitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet, or other mobile device).

System 200 may comprise a communication interface 240. Communication interface 240 allows software and other data to be transferred between system 200 and external devices, networks, or other external systems 245. For example, data, which may include computer software or executable code, may be transferred to system 200 from external system 245 (e.g., a network server, personal computer, or other device) and/or from system 200 to external system 245, via communication interface 240. Examples of communication interface 240 include a built-in network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network (e.g., network(s) 120) or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated services digital network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Data transferred via communication interface 240 are generally in the form of electrical communication signals 255. These signals 255 may be provided to communication interface 240 via a communication channel 250. In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer programs (e.g., comprised in software 112), comprising computer-executable code or instructions, are stored in main memory 215 and/or secondary memory 220. Computer programs can also be received via communication interface 240 and stored in main memory 215 and/or secondary memory 220. The computer programs, when executed, enable system 200 to perform one or more of the processes described elsewhere herein.

In this description, the term "computer-readable medium" is used to refer to any non-transitory computer-readable storage media used to provide computer-executable code and/or other data to or within system 200. Examples of such media include main memory 215, secondary memory 220 (including internal memory 225 and/or removable medium 230), and any peripheral device communicatively coupled with communication interface 240, such as external system 245. These non-transitory computer-readable media are means for providing executable code, programming instructions, software, and/or other data to processor(s) 210.

System 200 may also include optional wireless communication components that facilitate wireless communication over a voice network and/or a data network (e.g., in the case of user system 130 that is a smart phone or other mobile device, a sensor and/or actuator within target system 140, etc.). The wireless communication components comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive signal, which is sent from radio system 265 to baseband system 260.

Baseband system 260 is also communicatively coupled with processor(s) 210, which may have access to data storage areas 215 and 220. Thus, data, including computer programs, can be received from baseband processor 260 and stored in main memory 210 or in secondary memory 220, or executed upon receipt. Such computer programs, when executed, may enable system 200 to perform one or more of the disclosed processes.

3. Example Data Flow for Management of Target System

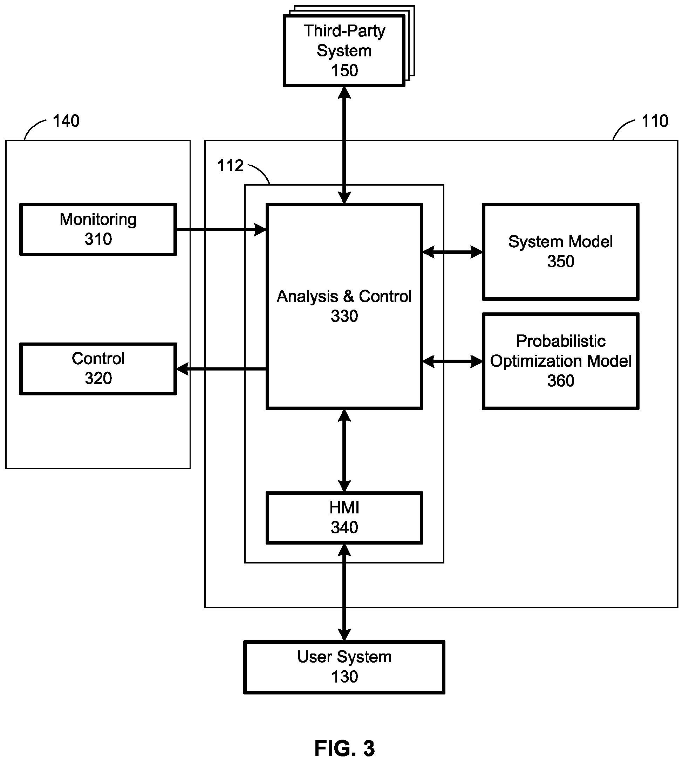

FIG. 3 illustrates an example data flow for probabilistic optimization, according to an embodiment. Target system 140 may comprise a monitoring module 310 and a control module 320. Software 112 of management system 110 may comprise an analysis and control module 330, and a human-to-machine interface (HMI) 340. Analysis and control module 330 may interact with or comprise a system model 350, which may be stored in database 114 of management system 110. It should be understood that communications between the various systems may be performed via network(s) 120. In addition, communications between a pair of modules may be performed via an application programming interface (API) provided by one of the modules or by other inter-process communication means.

Monitoring module 310 may monitor and collect data that are output by one or more sensors in target system 140. For example, the sensors in the network of a power system may sense voltage at a node, current on a power line, one or more parameters of an asset, the status of a switch (e.g., open or closed), and/or the like. Monitoring module 310 may also derive additional data from the collected data. Monitoring module 310 may transmit or "push" the collected and/or otherwise derived data as system telemetry to analysis and control module 330 (e.g., via an API of analysis and control module 330). Alternatively, analysis and control module 330 may retrieve or "pull" the system telemetry from monitoring module 310 (e.g., via an API of monitoring module 310). The system telemetry may include measurements at each of one or more nodes (e.g., buses within a power system) or other points within a network of target system 140. The system telemetry may be communicated from monitoring module 310 to analysis and control module 330 in real time, as data are collected and/or otherwise derived, or periodically. As used herein, the term "real time" includes events that occur simultaneously, as well as events that are separated in time by ordinary delays resulting from latencies in processing, memory access, communications, and/or the like.

Analysis and control module 330 may receive the system telemetry from monitoring module 310, use the system telemetry in conjunction with system model 350 to determine a configuration for target system 140 (e.g., one or more assets in a power system), and then control target system 140 to transition to the determined configuration. In particular, analysis and control module 330 may generate control signals that are transmitted to control module 320 of target system 140. For example, the control signals may be sent via an API of control module 320. The control signals may be communicated from analysis and control module 330 of management system 110 to control module 320 of target system 140 in real time, as the system telemetry is received and analyzed, periodically (e.g., in advance of a sliding time window), or in response to a user operation. Analysis and control module 330 may control target system 140 automatically (e.g., without any user intervention), semi-automatically (e.g., requiring user approval or confirmation), and/or in response to manual user inputs.

Each third-party system 150 may supply extrinsic data to analysis and control module 330. Third-party system 150 may transmit or push the extrinsic data to analysis and control module 330 (e.g., via an API of analysis and control module 330). Alternatively, analysis and control module 330 may retrieve or pull the extrinsic data from third-party system 150 (e.g., via an API of third-party system 150). The extrinsic data may include any data that are utilized by analysis and control module 330 and that are not available from an intrinsic source, such as monitoring module 310 or database 114. The extrinsic data may comprise or consist of data that are exogenous to target system 140. In the context of target system 140 being a power system, the exogenous data may comprise one or more historical and/or forecast weather parameters, such as temperature, humidity, solar insolation, wind, barometric pressure, precipitation, alerts, and/or the like. In this case, third-party system 150 may comprise a weather service, such as the United States National Weather Service. As another example, the extrinsic data may comprise one or more historical and/or forecast market parameters, such as an energy price in a primary or ancillary services market. In this case, third-party system 150 may comprise an energy market in which energy is traded.

Analysis and control module 330 may receive intrinsic data from monitoring module 310 and/or database 114 and/or receive extrinsic data from one or more third-party systems 150, and derive input data from the received intrinsic and/or extrinsic data. The input data may comprise values extracted and/or otherwise derived (e.g., calculated, inferred, interpolated, imputed, etc.) from the received data. Analysis and control module 330 may have access to a system model 350 (e.g., stored in database 114) of target system 140, and apply a probabilistic optimization model 360 to the input data and system model 350 to produce an output. As will be discussed elsewhere herein, this output may comprise a plurality of ranked resiliency measures.

Analysis and control module 330 may make decisions and/or perform operations on target system 140, based on the output of probabilistic optimization model 360. As an example, analysis and control module 330 may utilize the output to determine an optimal configuration of target system 140 at some future time. Based on this determination, analysis and control module 330 may automatically (i.e., without any user involvement), semi-automatically (e.g., with user approval or confirmation via human-to-machine interface 340), or manually (e.g., in response to a manual user request) initiate a control operation, to change a real-time or scheduled operation of target system 140, based on the optimal configuration. Initiation of the control operation may comprise transmitting control commands to control module 320 of target system 140, which may responsively control target system 140 according to the control commands.

Control module 320 of target system 140 receives the control signals from analysis and control module 330, and controls one or more components of target system 140 in accordance with the control signals. In the context of a power system, examples of such control include, without limitation, setting a setpoint (e.g., active and/or reactive power for power generators, voltage, etc.), adjusting the power output of a power generator, adjusting the charging or discharging of an energy storage system, adjusting the power input to a load, activating or deactivating a load, closing or opening a switch (e.g., circuit breaker), and/or the like.

Human-to-machine interface 340 may generate a graphical user interface that is transmitted to user system 130 and receive inputs to the graphical user interface via user system 130. The graphical user interface may provide information regarding the current state of target system 140 determined from the system telemetry, a predicted state of target system 140 determined by analysis and control module 330, the output of probabilistic optimization model 360, a configuration of target system 140 determined by analysis and control module 330, a control decision or recommendation for target system 140 determined by analysis and control module 330, and/or the like. In addition, the graphical user interface may provide inputs that enable a user of user system 130 to configure settings of analysis and control module 330, build and/or modify system model 350, train, configure, test, and/or deploy probabilistic optimization model 360, accept or reject decisions, or recommendations, specify, approve, and/or reject controls to be transmitted to control module 320 of target system 140, analyze target system 140, and/or the like.

System model 350 may be stored as a data structure in database 114 and accessed by modules, such as analysis and control module 330, via any known means (e.g., via an API of database 114, a direct query of database 114, etc.). For example, system model 350 may be loaded into memory (e.g., 215 and/or 220) from database 114 and executed by management system 110 as a service (e.g., as a microservice) that is accessible to analysis and control module 330 via an API. Management system 110 may provide an individual system model 350 for each target system 140 that is managed by management system 110, and/or a collective system model 350 that is used for two or more target systems 140.

Similarly, probabilistic optimization model 360 may be stored as a data structure in database 114 and accessed by modules, such as analysis and control module 330, via any known means (e.g., via an API of database 114, a direct query of database 114, etc.). For example, probabilistic optimization model 360 may be loaded into memory (e.g., 215 and/or 220) from database 114 and executed by management system 110 as a service (e.g., as a microservice) that is accessible to analysis and control module 330 via an API. Management system 110 may provide an individual probabilistic optimization model 360 for each target system 140 that is managed by management system 110, and/or a collective probabilistic optimization model 360 that is used for two or more target systems 140.

4. Example Process

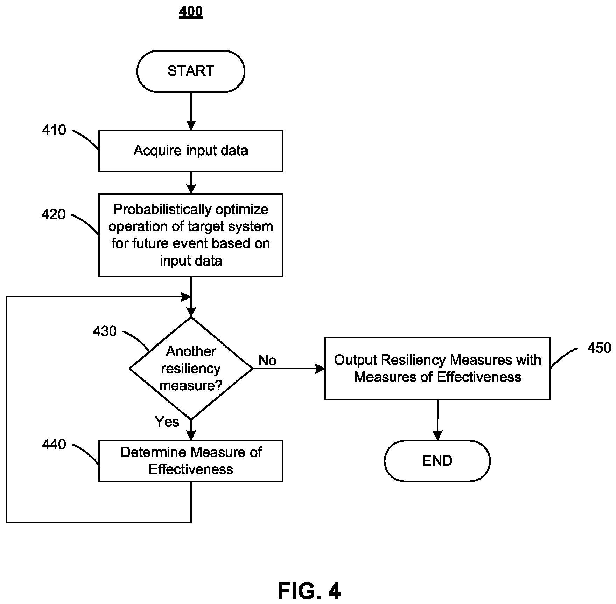

FIG. 4 illustrates an example process 400 for probabilistic optimization, according to an embodiment. Process 400 may be implemented by software 112, for example, within analysis and control module 330, using probabilistic optimization model 360. While process 400 is illustrated with a certain arrangement and ordering of subprocesses, process 400 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

Although not a requirement, it will generally be assumed herein that target system 140 is a power system, and particularly, a power network. A power network may refer to any interconnection of electrical components, such as a distribution network and/or transmission network. A distribution network delivers power to individual consumers, whereas a transmission network carries bulk electrical energy from a generating site to an electrical substation. Disclosed embodiments will work with any type of power network, including any type of distribution network and any type of transmission network, as long as suitable data are available for the power network.

In subprocess 410, input data are acquired. The input data may be acquired based on data from one or more data sources, including one or more intrinsic data sources, such as monitoring module 310 of target system 140, database 112, and/or the like, and/or one or more extrinsic data sources, such as one or more third-party systems 150. In an embodiment, the input data are derived from or otherwise based on asset data, forecast data, probabilistic data, and/or other data.

The asset data are associated with one or more, and generally a plurality, of assets of target system 140. At least a portion of the asset data may be acquired from a geographic information system (GIS) of the operator, a network controller (e.g., implementing control module 320), and/or the like. An asset may be any component of target system 140. In an embodiment in which target system 140 is a power system, the asset(s) may be any type of power-delivery asset, including, without limitation, power generators, energy storage systems, electrical loads, transformers, inverters, branches or other power lines (e.g., overhead or underground power lines), poles on which power lines are mounted, capacitor banks, voltage regulators, switches, fuses, reclosers, and/or any other component supporting the power system. The asset data may comprise an identifier of each asset, one or more parameters of each asset, and, in the case of a power network or other network, connectivity information (e.g., a connectivity model) that indicates connections (e.g., electrical connections, communication connections, etc.) between the asset(s). The parameter(s) of each asset may include the status of the asset (e.g., open or closed in the case of a switch, on or off in the case of a power generator, charging or discharging in the case of an energy storage system, etc.), measured values of the asset (e.g., power output, power input, voltage, current, etc.), calculated values of the asset, and/or the like, such that power flow can be determined and controlled. The parameter(s) of each asset may also include a failure probability or failure probability distribution of the asset.

The parameter(s) of each asset may also comprise criticality information that indicates a criticality of the asset, such as a power line, power generator, electrical load, and/or the like, of a power network. It should be understood that the criticality of an asset refers to a degree of importance or impact of failure of the asset to the proper operation of target system 140, relative to the other assets of target system 140. The criticality information may comprise a criticality index, which may classify each asset into one of a plurality of classes of criticality (e.g., low, medium, or high) or otherwise quantify the criticality of each asset (e.g., as a numerical value from zero to one, zero to one hundred, etc.). The criticality of electrical loads may be determined by the utility and/or consumers, whereas the criticality of other nodes within the power network may be determined by graph theory or other means. Different criticality indices may be used for different asset types, or the same criticality index may be used for every asset type.

The table below lists exemplary parameters that may be included in the asset data for each of a plurality of asset types that are relevant to a target system 140 that comprises a distribution network:

| Asset Type | Parameters |
|---|---|
| Power line | location, length, phases, rating, impedance, criticality index |
| Pole | location, age, build material |
| Substation | location |
| Distributed energy resource | location, type, rating, phases, operating properties, criticality index |
| Network Switch | location, phases, status, rating, criticality index |
| Electrical Load | location, phases, type, criticality index, forecast values |

The forecast data are associated with at least one future event. It should be understood that a future event is any event that occurs after the current time, including events that occur milliseconds or seconds after the current time, as well as events that occur minutes, hours, days, weeks, months, years, or the like, after the current time. The future event(s) may comprise a weather event, such as an extreme weather event. Examples of extreme weather events include, without limitation, a storm, hurricane, flood, wildfire, and the like. Alternatively or additionally, the future event(s) may comprise non-extreme weather events, such as a mild storm, high heat, and the like, or non-weather events, such as a cyber-security attack, socio-political event (e.g., riot, terroristic attack, etc.), and the like. More generally, the event may be any forecastable event that has the potential to damage target system 140 or otherwise disrupt the operation of target system 140. In any case, the forecast data may comprise any forecastable parameter(s) of the event for any time period of the event. The time period may span the entire event or any portion of the event (e.g., one of a plurality of time intervals spanning the event). For example, if the event is a weather event, the forecast data may comprise a weather forecast for the time period, which may include the forecast value of one or more weather parameters, such as temperature, precipitation, humidity, wind speed, pressure, and/or the like. In the case that target system 140 is a power system that comprises renewable energy resources, the weather forecast may be used to forecast power generation in the power system. Alternatively or additionally, in an embodiment in which target system 140 is a power system, the forecast data may comprise a forecast of the electrical loads on the power system, such as a forecast of real power and/or reactive power consumed by all electrical loads in the power network. While shorter time intervals for the forecast data will provide higher resolution, disclosed embodiments will work with any time interval.

The probabilistic data account for the uncertainty that is associated with a future event. The probabilistic data may represent the impact of the future event on the assets of target system 140, using realistic assumptions. It should be understood that the content of the probabilistic data may vary depending on the type of optimization that is used by probabilistic optimization model 360. For example, if stochastic (i.e., scenario-based) modeling is used for optimization, the probabilistic data may comprise a plurality of scenarios representing possible asset failures according to the probability of occurrence. If robust modeling is used for optimization, the probabilistic data may comprise the failure probability distribution for each of one or more of the assets (e.g., potentially all of the assets). If chance-constrained modeling is used for optimization, the probabilistic data may comprise the failure probability distribution for each of one or more of the assets and a tolerance probability. If risk-driven modeling is used for optimization, the probabilistic data may comprise a plurality of scenarios representing possible asset failures according to the probability of occurrence, and criticality information (e.g.,

criticality index) for each of one or more the assets. If hybrid stochastic-robust modeling is used for optimization, the probabilistic data may comprise a plurality of scenarios representing possible asset failures according to the probability of occurrence, and the failure probability distribution for each of one or more of the assets.

In the event that the probabilistic data comprise a plurality of scenarios, the scenarios may be generated using any suitable technique, such as Monte Carlo sampling or the like. Each scenario may indicate a set of asset(s) that have failed in the scenario, and be associated with a probability of occurrence. In an embodiment, the sum of the probabilities of occurrence for all of the plurality of scenarios is always one.

The input data may be derived from the set of data that include the asset data, forecast data, probabilistic data, and/or other data. The input data may be derived by extracting or parsing a value from this set of data, calculating a value from one or more values in this set of data, and/or the like. In a simple case, the input data could simply comprise or consist of the set of data. Alternatively, the set of data may be processed in some manner to derive the input data..

In subprocess 420, the operation of target system 140 is probabilistically optimized for the future event based on the input data, acquired in subprocess 410. In particular, the input data may be input to probabilistic optimization model 360, which optimizes at least one parameter of an operation of target system 140 for the future event using probabilistic inputs, such as the probabilistic data described above. At a high level, probabilistic optimization model 360 may optimize an objective function that computes at least one parameter of an operation of target system 140.

It should be understood that probabilistic optimization model 360 may comprise one model or a plurality of models. For example, probabilistic optimization model 360 may comprise a different model for each of a plurality of resiliency measures available to analysis and control module 330. For example, each of the plurality of resiliency measures may utilize a different model, or two or more, including potentially all, of the plurality of resiliency measures may utilize the same model.

As mentioned above, there may be a plurality of resiliency measures available to analysis and control module 330. All of the plurality of resiliency measures, supported by management system 110, may always be available to analysis and control module 330 for a given target system 140. Alternatively, the plurality of resiliency measures that are available to analysis and control module 330, for a given target system 140, may depend on one or more factors, such as user settings or preferences, system settings, attributes of target system 140, and/or the like. In the case that user settings are used to limit the plurality of available resiliency measures, the operator of target system 140 may limit which resiliency measures are available according to the operator's implementing capacity. If the operator has the resources to implement all resiliency measures supported by management system 110, then analysis and control module 330 may consider all resiliency measures. Conversely, if the operator does not have the resources to implement all of the resiliency measures supported by management system 110, the operator may limit the available resiliency measures to only the subset of resiliency measures which the operator has the resources to implement. It should be understood that the operator may limit the available resiliency measures for other reasons as well, such as user preference, requirements of the operator, operating scenario, and/or the like.

In subprocess 430, it is determined whether or not another resiliency measure remains to be considered. It should be understood that process 400 may consider each of the plurality of resiliency measures that is available to analysis and control module 330. When another resiliency measure remains to be considered (i.e., "Yes" in subprocess 430), process 400 may proceed to subprocess 440 to consider the next resiliency measure. Otherwise, when no resiliency measures remain to be considered (i.e., "No" in subprocess 430), process 400 may proceed to subprocess 450.

Examples of possible resiliency measures are described in detail elsewhere herein, and may include, for instance, load curtailment, network topology optimization, preemptive electrical islanding, and/or distributed energy resource (DER) dispatch. It should be understood that the resiliency measures that are made available in an embodiment may comprise or consist of any one or combination of two or more of these exemplary resiliency measures. For example, in various embodiments, the available resiliency measures may comprise or consist of load curtailment, network topology optimization, preemptive electrical islanding, DER dispatch, load curtailment and network topology optimization, load curtailment and preemptive electrical islanding, load curtailment and DER dispatch, load curtailment and network topology optimization and preemptive electrical islanding, load curtailment and network topology optimization and DER dispatch, load curtailment and network topology optimization and preemptive islanding and DER dispatch, load curtailment and preemptive islanding and DER dispatch, network topology optimization and preemptive islanding, network topology optimization and DER dispatch, network topology optimization and preemptive islanding and DER dispatch, preemptive islanding and DER dispatch, or the like.

In subprocess 440, a measure of effectiveness is determined for the resiliency measure under consideration, based on the solution to probabilistic optimization model 360 in subprocess 420. The measure of effectiveness quantifies an effectiveness of the resiliency measure on the operation of target system 140 for the future event. For example, the measure of effectiveness of a resiliency measure may be based on (e.g., comprise or consist of) an expected improvement in the operation of target system 140 during the future event assuming that the resiliency measure is implemented. As another example, the measure of effectiveness of a resiliency measure may be based on an ease of implementing the resiliency measure. In a preferred embodiment, the measure of effectiveness is based on both the expected improvement in the operation of target system 140 during the future event, assuming the resiliency measure is implemented, and the ease of implementing the resiliency measure. In this case, even if a resiliency measure has a higher measure of effectiveness, it could potentially be ranked lower than another resiliency measure that has a lower measure of effectiveness but is easier to implement. For example, a measure of effectiveness may be determined for only load curtailment, only network topology optimization, only preemptive electrical islanding, only DER dispatch, each of load curtailment and network topology optimization, each of load curtailment and preemptive electrical islanding, each of load curtailment and DER dispatch, each of load curtailment and network topology optimization and preemptive electrical islanding, each of load curtailment and network topology optimization and DER dispatch, each of load curtailment and network topology optimization and preemptive islanding and DER dispatch, each of load curtailment and preemptive islanding and DER dispatch, each of network topology optimization and preemptive islanding, each of network topology optimization and DER dispatch, each of network topology optimization and preemptive islanding and DER dispatch, each of preemptive islanding and DER dispatch, or the like.

In subprocess 450, the plurality of resiliency measures with their respective measures of effectiveness, calculated in iterations of subprocess 440, are output. For example, the plurality of resiliency measures with their respective measures of effectiveness may be output to a network controller of target system 140. The network controller may be the control function of analysis and control module 330, in which case the output may be an intra-process or inter-process communication. Alternatively, the network controller may be control module 320 of target system 140, or another component that is separate from analysis and control module 330.

As another example, the plurality of resiliency measures with their respective measures of effectiveness may be output to human-to-machine interface 340, to be reviewed by the operator of target system 140. In this case, the operator may manually select one or more of the plurality of resiliency measures to implement based, for example, on their respective measures of effectiveness and potentially other factors. Thus, the operator can assess the trade-off between the value of a resiliency measure and other non-grid related factors. For example, the operator could choose to implement only load curtailment, only network topology optimization, only preemptive electrical islanding, only DER dispatch, each of load curtailment and network topology optimization, each of load curtailment and preemptive electrical islanding, each of load curtailment and DER dispatch, each of load curtailment and network topology optimization and preemptive electrical islanding, each of load curtailment and network topology optimization and DER dispatch, each of load curtailment and network topology optimization and preemptive islanding and DER dispatch, each of load curtailment and preemptive islanding and DER dispatch, each of network topology optimization and preemptive islanding, each of network topology optimization and DER dispatch, each of network topology optimization and preemptive islanding and DER dispatch, each of preemptive islanding and DER dispatch, or the like.

Prior to outputting the plurality of resiliency measures with their respective measures of effectiveness, the plurality of resiliency measures may be ranked according to the measures of effectiveness. For example, the measures of effectiveness may utilize the same unit of measure and/or be normalized to the same range of values so that the measure of effectiveness of a first resiliency measure may be easily compared to the measure of effectiveness of a second resiliency measure that is different from the first resiliency measure. It should be understood that a resiliency measure with a higher measure of effectiveness may be ranked higher than a resiliency measure with a lower measure of effectiveness.

The plurality of resiliency measures may comprise or consist of load curtailment, network topology optimization, preemptive electrical islanding, and/or dispatching one or more energy resources. Each of these resiliency measures will be described in greater detail elsewhere herein. It should be understood that these resiliency measures are provided as examples, and that the plurality of resiliency measures may comprise or consist of all of these resiliency measures, none of these resiliency measures, or a subset of these resiliency measures. In addition, the plurality of resiliency measures may comprise additional resiliency measures that are not specifically described herein. Essentially, any measure that, if implemented, may reduce disruption to the operation of target system 140 during the future event can be included in the plurality of resiliency measures available to analysis and control module 330.

As mentioned above, probabilistic optimization model 360, which is applied to the input data in subprocess 420, may comprise different models for different ones of the plurality of resiliency measures. For example, in the case that target system 140 is a power network and the plurality of resiliency measures comprises load curtailment, probabilistic optimization model 360 may comprise a model with an objective function that computes expected load supply of the power network, and which maximizes this expected load supply. In an embodiment in which the asset data comprises criticality information that indicates a criticality of load(s) of the power network, the objective function may weight these load(s) according to their respective criticality indices. As another example, in the case that target system 140 is a power network and the plurality of resiliency measures comprises network topology optimization, probabilistic optimization model 360 may model a topology of the power network, and the solution to probabilistic optimization model 360 may comprise an optimized network topology to which the power network should be reconfigured. As another example, in the case that target system 140 is a power network and the plurality of resiliency measures comprises preemptive electrical islanding, probabilistic optimization model 360 may model electrical islanding within the power network, and the solution to probabilistic optimization model 360 may comprise a microgrid configuration comprising a plurality of electrical islands (e.g., microgrids) within the power network. As another example, in the case that target system 140 is a power network and the plurality of resiliency measures comprises dispatching distributing energy resources, probabilistic optimization model 360 may model the dispatch of distributed energy resources (DERs) within the power network, and the solution to probabilistic optimization model 360 may comprise a dispatch of each of one or more distributed energy resources within the power network (e.g., potentially including the placement of one or more mobile distributed energy resources within the power network).

Process 400 may be performed automatically and iteratively at the expiration of each of a plurality of time intervals or according to another periodicity. For example, process 400 may be performed for a future time window based on currently available input data. In each iteration of process 400, the future time window may slide according to a time step. The time step may be any amount of time, and in an embodiment, may be equal to the time interval and the length of the time window. For example, if the time window is a twenty-four hour period, process 400 may be performed every day for future events over the following day. It should be understood that, as the length of the time window decreases, the resolution of the optimization increases. Thus, it is generally preferable to have a small time window, such as a minutes, tens of minutes, hours, or the like. However, this may not be practical for certain resiliency measures, such as network topology optimization, since it is not feasible to reconfigure the network topology every few minutes. Thus, an appropriate balance may be found (e.g., a 6-hour time window) based on the available resiliency measures and/or other factors. In an additional or alternative embodiment, process 400 may be performed in response to a manual user operation via human-to-machine interface 340, and/or in response to another triggering event, such as a notification from a third-party system 150 (e.g., weather service) about an impending event (e.g., extreme weather event).

5. Example Measure of Effectiveness

The measure of effectiveness of a resiliency measure should quantify the potential benefit of implementing the resiliency measure. In an embodiment, the measure of effectiveness is calculated relative to a case in which the resiliency measure is not implemented. In particular, the measure of effectiveness may be determined by comparing target system 140 with implementation of the resiliency measure to an equivalent target system 140 without implementation of the resiliency measure.

Since the measure of effectiveness must be determined in advance of a future event, a scenario-based approach may be used to account for the uncertainty about how the future event will actually unfold. In particular, the performance of the resiliency measure can be assessed across at least a subset of probable scenarios. For example, if the future event is a weather event, each scenario may represent a set of one or more possible weather conditions and the respective impacts of those weather condition(s) on target system 140. This approach provides knowledge of: (i) which improvements need to be made to target system 140, from a long-term perspective, to permanently harden target system 140 against such events; and (ii) expected performance of target system 140 during such events to enable short-term resiliency measures to be implemented. To ensure that there is no bias in the evaluation of the resiliency measure, the scenarios that are used for determining the measure of effectiveness may be different from the scenarios used by probabilistic optimization model 360 in embodiments in which probabilistic optimization model 360 is scenario-based.

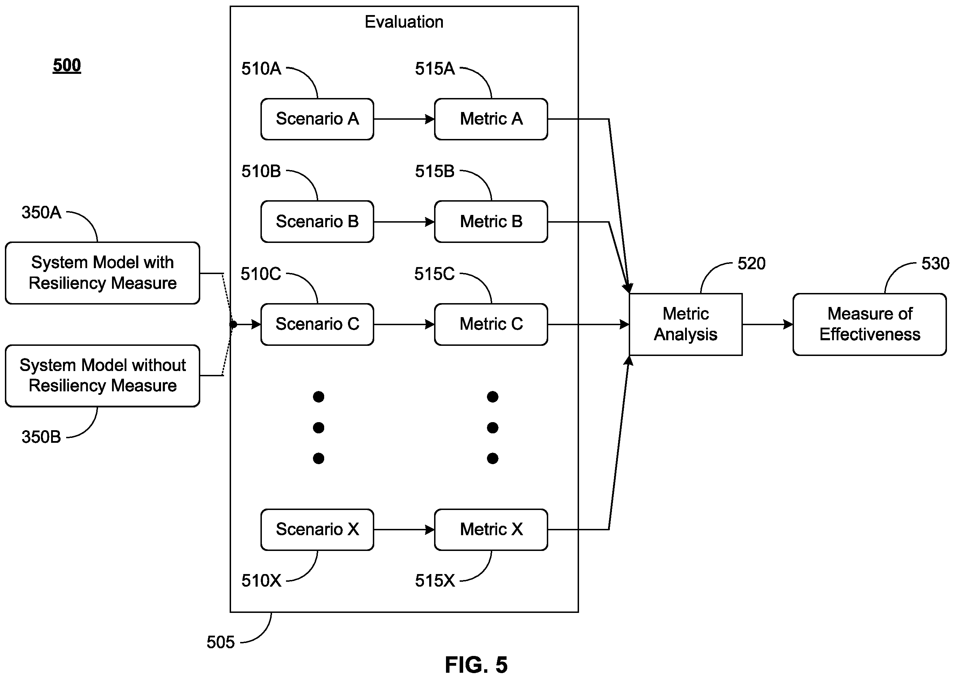

FIG. 5 illustrates an example process 500 for calculating a measure of effectiveness for a resiliency measure, according to an embodiment. A system model 350A of target system 140, with the resiliency measure implemented, and a system model 350B of target system 140, without the resiliency measure implemented, are both input to an evaluation process 505. Evaluation process 505 may be individually performed on system model 350A and system model 350B, either serially or in parallel.

For each of system models 350A and 350B, evaluation process 505 evaluates the performance of target system 140 in each of a plurality of scenarios 510, illustrated as scenarios 510A, 510B, 510C,..., 5 10X, representing at least a subset of probable scenarios during the future event. As used herein, a reference numeral with an appended letter will be used to refer to a specific component, whereas the same reference numeral without any appended letter will be used to refer collectively to a plurality of the component or to refer to a generic or arbitrary instance of the component. Thus, for example, the term "scenarios 510" refers collectively to scenarios 510A, 510B, 510C,..., 510X, and the term "scenario 510" may refer to any single one of scenarios 510A, 510B, 510C,..., 510X.

It should be understood that each scenario 510 represents a possible real-world occurrence. Scenarios 510 may be generated, for example, by analysis and control module 330. Each scenario 510 may indicate the status of at least a subset of the plurality of assets in target system 140. For example, a scenario 510 may indicate a potential status (e.g., operational or failed) of each power line in the power system (e.g., power network) of target system 140 during the future event.

For each of the plurality of scenarios 510, evaluation process 505 computes a metric 515, illustrated as metrics 515A, 515B, 515C,...,515X, representing the predicted performance of target system 140 in the respective scenario 510. For example, metric 515A represents the predicted performance of target system 140 in scenario 510A, metric 515B represents the predicted performance of target system 140 in scenario 510B, metric 515C represents the predicted performance of target system 140 in scenario 510C, and metric 515X represents the predicted performance of target system 140 in scenario 510X. Each of metrics 515 for scenarios 510 are output by evaluation process 505 to a metric analysis module 520.

Metric analysis module 520 may compute a measure of effectiveness 530 from metrics 515 computed by evaluation process 505. For example, measure of effectiveness 530 may be computed from an algorithm that determines a composite value of metrics 515. The composite value may be an average, weighted average (e.g., weighted according to the probability of occurrence of each scenario 510), median, and/or the like of metrics 515.

Metrics 515 and/or measure of effectiveness 530 may each comprise the value of each of one or more key performance indicators. It should be understood that the key performance indicator(s) that are used may be the same for each metric 515. The key performance indicator(s) that are used may be selected by an operator of target system 140. Different key performance indicator(s) may be used depending on the particular resiliency measures to be ranked.

Any one or more key performance indicators may be used for metrics 515 and/or measure of effectiveness 530. Examples of key performance indicators include, without limitation, total load supply (or total load not supplied), critical load supply (or critical load not supplied), average load interruption duration, average total load interruption duration (e.g., System Average Interruption Duration Index (SAIDI)), average node voltage violation interval percentage, average branch flow violation interval percentage, percent network connectivity to power sources, photovoltaic (PV) utilization percentage, battery energy storage system (BESS) state of charge (SOC) reserve margin violation interval percentage, number of customers facing an outage, and/or the like. PV utilization percentage and BESS SOC reserve margin violation interval percentage are DER-specific metrics. Similar DER-specific metrics may be used for other types of distributed energy resources.

Total load supply may be calculated as:

$$\sum_{i \in N} P_i^D , \sum_{i \in N} Q_i^D$$

wherein $N$ is a set of nodes in target system 140, $P_i^D$ is the value (e.g., in kilowatts (kW)) of real power load at node $i$, and $Q_i^D$ is the value (e.g., in kilovolt amperes (kVAr)) of reactive power load at node $i$.

Critical load supply may be calculated as:

$$\sum_{i \in N_{Critical}} P_i^D , \sum_{i \in N_{Critical}} Q_i^D$$

wherein $N$ is a set of critical nodes in target system 140.

Average load interruption duration may be calculated (e.g., in a unit of time, such as hours, minutes, etc.) as:

$$\frac{\sum_{i \in T} 1_{P_i^D = 0, \, Q_i^D = 0}}{|T|} \Delta t$$

wherein T is a set of time intervals, and $\Delta t$ is a time duration.

Average total load interruption duration (e.g., SAIDI) may be calculated (e.g., in a unit of time, such as hours, minutes, etc.) as:

$$\frac{\sum_{i \in N} \sum_{i \in T} 1_{P_i^D = 0, \, Q_i^D = 0}}{|N| * |T|} \Delta t$$

Average node voltage violation interval percentage may be calculated (e.g., as a percentage) as:

$$\frac{\sum_{i \in T} 1_{V_{i,t} > \bar{V} \text{ or } V_{i,t} < \underline{V}}}{|T|} * 100$$

wherein $V_{i,t}$ is the voltage at node $i$ in time interval $t$, $\underline{V}$ is the minimum limit (per unit) for node voltage, and $\overline{V}$ is the maximum limit (per unit) for node voltage.

Percent network connectivity to power sources may be calculated (e.g., as a percentage) as:

$$\frac{\sum_{i \in N} 1_{P_i^D > 0, \, Q_i^D > 0}}{|N|} * 100$$

PV utilization percentage may be calculated (e.g., as a percentage) as:

$$\frac{\sum_{t \in T} P_{i,t}^{PV}}{\sum_{t \in T} \overline{P}_{i,t}^{PV}} * 100$$

wherein $P_{i,t}^{PV}$ is the real power output of the PV generator at node $i$ in time interval $t$, and $\overline{P}_{i,t}^{PV}$ is the forecasted real power that is output by the PV generator at node $i$ in time interval $t$.

BESS SOC reserve margin violation interval percentage may be calculated (e.g., as a percentage) as:

$$\frac{\sum_{t \in T} 1_{SOC_{i,t} > \overline{SOC} \text{ or } SOC_{i,t} < \underline{SOC}}}{|T|} * 100$$

wherein $SOC_{i,t}$ is the state of charge of the BESS unit at node $i$ in time interval $t$, $\overline{SOC}$ is the maximum limit for the state of charge, and $\underline{SOC}$ is the minimum limit for the state of charge.

6. Resiliency Measures

As mentioned above, the plurality of resiliency measures may comprise load curtailment, network topology optimization, preemptive electrical islanding, and/or DER dispatch (e.g., dispatching, re-dispatching, or placing distributed energy resources). In an embodiment, the plurality of resiliency measures comprises at least load curtailment and network topology optimization. Generally, utilities already have the necessary infrastructure and systems in place to enable load curtailment (e.g., demand response) and network topology reconfiguration (e.g., via remote-controlled switches in target system 140). A utility may implement preemptive electrical islanding and/or DER dispatch based on the availability of islanding systems and stationary and/or mobile distributed energy resources, respectively. Notably, load curtailment and DER dispatch can enable secure operation of target system 140 by maintaining demand-supply balance within target system 140. In general, in terms of the ease of implementation, which may be considered when ranking the resiliency measures, network topology optimization is the easiest to implement, load curtailment is the second easiest to implement, DER dispatch is the third easiest to implement, preemptive islanding using only existing distributed energy resources is the fourth easiest to implement, and preemptive islanding using one or more mobile distributed energy resources is the fifth easiest or most difficult to implement.

Probabilistic optimization model 360 may comprise one or more optimization models for the plurality of resiliency measures. For example, an optimization model may be constructed for each resiliency measure, or one optimization module may be constructed for two or more resiliency measures. The optimization models that are used for different resiliency measures may differ from each other or be the same. In any case, each optimization model may accept, in the input data, a probabilistic input that accounts for the uncertainty inherent in the future event under consideration, and output an optimal decision for the applicable resiliency measure(s), in terms of increasing the operational resilience of target system 140 in an uncertainty-aware manner.

In an embodiment, probabilistic optimization model 360 may comprise at least an optimal power flow (OPF) model. A typical OPF problem finds an optimal decision for the operation of target system 140 by optimizing (e.g., minimizing or maximizing) an objective function, subject to any operational constraints on target system 140. Typical objective functions include, without limitation, maximizing the load supplied, maximizing load curtailment, minimizing network losses, minimizing the cost of operation, and the like. Typical operational constraints include, without limitation, constraints on power flow, constraints that limit power generation, constraints on load control, constraints on voltage, constraints that limit switching, constraints on ramp rate, and the like.

When making operational decisions for an abnormal event, such as an extreme weather event, the optimal power flow must account for the fact that the components of target system 140 may not operate as desired, due to significant changes in the operating environment. Accordingly, in an embodiment, the OPF model is modified to account for unpredictable scenarios caused by the future event, add new constraints that support the resiliency measures, and/or add new constraints that account for operator preferences (e.g., with respect to acceptable risks, prioritization of resiliency measures, etc.). The primary example of this modified OPF model that is described herein is based on scenario-based stochastic optimization. However, alternative OPF optimizations may be used, including, without limitation, robust optimization, hybrid stochastic-robust optimization, chance-constrained optimization, risk-driven optimization, and the like, with appropriate changes to the constraints.

6.1. Load Curtailment

Extreme weather events may introduce a high degree of uncertainty in the operation of a target system 140, such as a distribution network. This uncertainty largely stems from the different assets that can fail (e.g., due to damage caused by the event). Under normal operating conditions, the failure rate of assets is low. However, severe or extreme events induce a high failure rate among assets and can cause multiple failures within a short duration of time. Furthermore, during such events, it is difficult to physically assess the locations of faults and provide immediate fixes, due to potential damage to the non-electrical infrastructure, such as roads, buildings, and/or the like.

Thus, the OPF model should consider the uncertainty from asset failure. The most vulnerable assets in a distribution network are the poles and power lines. Damage to these assets is the primary source of power outages caused by weather events. Thus, the basic structure of the OPF model should account for at least the uncertainty in pole and line failures.

During extreme weather events, the goal of the network operator is to maximize the load that is supplied to consumers, while keeping the priorities of the loads in mind. For example, the highest priority may be given to critical loads, such as hospitals, fire stations, water-pumping stations, and the like. Conversely, the lowest priority may be given to residential loads, commercial buildings, community parks, and the like. Notably, the priorities of the loads may be dynamic and can change depending on the type of event.

In an embodiment, the OPF model accounts for load priorities and uncertainty in asset failures by maximizing the load supplied as follows:

$$\max \sum_{s \in \Omega} \rho_s \sum_{t \in T} \sum_{i \in N} \omega_i \left( P^D_{i,t,s} + Q^D_{i,t,s} \right)$$

wherein $\Omega$ is a set of scenarios, $T$ is a set of time intervals, $N$ is a set of nodes in target system 140, $\rho_s$ is the probability of occurrence of scenario s from the set of scenarios $\Omega$, $\omega_i$ is the weight of the load (e.g., representing the criticality of the load) at node $i$ in set of nodes $N$, $P^D_{i,t,s}$ is the value (e.g., in kW) of real power load at node $i$ in time interval $t$ for scenario $s$, and $Q^D_{i,t,s}$ is the value (e.g., in kVAr) of reactive power load at node $i$ in time interval $t$ for scenario $s$. At a high level, the OPF model maximizes the expected load supply, with preference given to higher weighted (e.g., more critical) loads, summed over all nodes, time intervals, and scenarios, while accounting for the probability of each scenario.

As mentioned above, the probabilistic OPF model may use a scenario-based approach that calculates expected load supply over a plurality of different scenarios. The scenarios may include a normal operating scenario as well as a plurality of failure scenarios, in which one or more assets have failed due to the future event. Each scenario may indicate each asset that is operational, if any, and each asset which has failed, if any, within the scenario. In the case of a power network, each scenario $s$ may be described as an edge set $E_s$ that, for each power line in the power network, indicates whether or not that power line is operational or failed.

The probabilistic OPF model may comprise the following first set of constraints, which represent nodal power balance using a branch flow model:

Constraint (1):

$$P^G_{i,t,s} - P^D_{i,t,s} = \sum_{j \in N_{i-Out}} P_{ij,t,s} - \sum_{j \in N_{i-In}} P_{ij,t,s}, \forall i \in N_{DER} \cup N_{Sub}, \forall ij \in E_s, \forall t \in T, \forall s \in \Omega$$

wherein $P_{i,t,s}^G$ is the value (e.g., in kW) of real power output (e.g., generated) by distributed energy resources at node $i$, $N_{i\text{-}out}$ is the set of nodes that connect to branches that originate from node $i$, $N_{i\text{-}In}$ is the set of nodes that connect to branches that terminate into node $i$, $P_{ij,t,s}$ is the value (e.g., in kW) of real power flow on the power line connecting nodes $i$ and $j$ in time interval $t$ for scenario $s$, $N_{DER}$ is the set of all distributed energy resources, and $N_{Sub}$ is the set of all substations.

Constraint (2):

$$Q_{i,t,s}^G - Q_{i,t,s}^D = \sum_{j \in N_{i-Out}} Q_{ij,t,s} - \sum_{j \in N_{i-In}} Q_{ij,t,s}, \forall i \in N_{DER} \cup N_{Sub}, \forall ij \in E_s, \forall t \in T, \forall s \in \Omega$$

wherein $Q_{i,t,s}^G$ is the value (e.g., in kVAr) of reactive power output (e.g., generated) by distributed energy resources at node $i$, and $Q_{ij,t,s}$ is the forecasted value (e.g., in kVAr) of reactive power flow on the power line connecting nodes $i$ and $j$ in time interval $t$ for scenario $s$.

Constraint (3):

$$-P_{i,t,s}^D = \sum_{j \in N_{i-Out}} P_{ij,t,s} - \sum_{j \in N_{i-In}} P_{ij,t,s}, \forall i \in N \backslash N_{DER} \backslash N_{Sub}, \forall ij \in E_s, \forall t \in T, \forall s \in \Omega$$

Constraint (4):

$$-Q_{i,t,s}^D = \sum_{j \in N_{i-Out}} Q_{ij,t,s} - \sum_{j \in N_{i-In}} Q_{ij,t,s}, \forall i \in N \backslash N_{DER} \backslash N_{Sub}, \forall ij \in E_s, \forall t \in T, \forall s \in \Omega$$

The goal of this first set of constraints is to ensure that the power balance conditions are satisfied at every node in the power system. Constraints (1) and (2) represent power balance for all of the nodes that have loads and generators connected to them, while Constraints (3) and (4) represent power balance for all the nodes with just loads connected to them. Collectively, these constraints ensure that the net power flow through each node is always zero. For simplicity, the power losses are ignored in these constraints.

The probabilistic OPF model may comprise the following second set of constraints, which represent line flow capacity constraints, and ensures that the total power flow on the power lines does not exceed the rated capacity of the power lines:

Constraint (5):

$$-\bar{P}_{ij} \leq P_{ij,t,s} \leq \bar{P}_{ij}, \forall ij \in E_s, \forall t \in T, \forall s \in \Omega$$

wherein $P_{ij}$ is the limit of real power flow (e.g., in kW) for the power line connecting node $i$ and node $j$.

Constraint (6):

$$-\bar{Q}_{ij} \leq Q_{ij,t,s} \leq \bar{Q}_{ij}, \forall ij \in E_s, \forall t \in T, \forall s \in \Omega$$

wherein $\overline{Q}_{ij}$ is the limit of reactive power flow (e.g., in kVAr) for the power line connecting node $i$ and node $j$.

The probabilistic OPF model may comprise the following third set of constraints, which represent voltage constraints, and ensures that the solution to the OPF model does not result in an overvoltage or undervoltage in the power system:

Constraint (7):

$$V_{i,t,s} = V_{j,t,s} - A_{ij}P_{ij,t,s} - B_{ij}Q_{ij,t,s}, \forall ij \in E_s, \forall t \in T, \forall s \in \Omega$$

wherein $V_{i,t,s}$ is the voltage at node $i$ in time interval t for scenario s, $V_{j,t,s}$ is the voltage at node $j$ in time interval $t$ for scenario $s$, $A_{ij}$ is the linearization matrix for computing the voltage drop in real power on the power line connecting node $i$ and node $j$, and $B_{ij}$ is the linearization matrix for computing the voltage drop in reactive power on the power line connecting node $i$ and node $j$.

Constraint (8):

$$\underline{V}^2 \leq V_{i,t,s} \leq \bar{V}^2, \forall i \in N, \forall t \in T, \forall s \in \Omega$$

wherein V is the minimum limit (per unit) for node voltage, $\bar{V}$ is the maximum limit (per unit) for node voltage, and $V_{i,t,s}$ is the squared node voltage (per unit) for node $i$ in time interval $t$ for scenario $s$.

Constraint (9):

$$V_{i,t,s} = V_{ref}^2, \forall i \in N_{Sub}, \forall t \in T, \forall s \in \Omega$$

wherein $V_{ref}$ is the reference voltage (per unit) for the substation node.

Constraints (7) and (8) compute the node voltages and limit the nodal voltages within acceptable bounds, respectively.

To model the voltage drop between nodes, based on the magnitude of the power flow, a linearized approach may be used. An example of such a linearized approach is described in D. B. Arnold, "Model-Free Optimal Control of Distributed Energy," U.C. Berkeley, 2015, which is hereby incorporated herein by reference as if set forth in full. The matrices $A_{ij}$ and $B_{ij}$ represent the linearized coefficients that model the impact of real and reactive power flow on the nodal voltage drops. The values of these matrices may be calculated as follows:

$$A_{ij} = \begin{bmatrix} -2r_{ij}^{aa} & r_{ij}^{ab} - \sqrt{3}x_{ij}^{ab} & r_{ij}^{ac} + \sqrt{3}x_{ij}^{ac} \\ r_{ij}^{ab} + \sqrt{3}x_{ij}^{ab} & -2r_{ij}^{bb} & r_{ij}^{bc} - \sqrt{3}x_{ij}^{bc} \\ r_{ij}^{ac} - \sqrt{3}x_{ij}^{ac} & r_{ij}^{bc} + \sqrt{3}x_{ij}^{bc} & -2r_{ij}^{cc} \end{bmatrix}$$

$$B_{ij} = \begin{bmatrix} -2x_{ij}^{aa} & x_{ij}^{ab} + \sqrt{3}r_{ij}^{ab} & x_{ij}^{ac} - \sqrt{3}r_{ij}^{ac} \\ x_{ij}^{ab} - \sqrt{3}r_{ij}^{ab} & -2x_{ij}^{bb} & x_{ij}^{bc} + \sqrt{3}r_{ij}^{bc} \\ x_{ij}^{ac} + \sqrt{3}r_{ij}^{ac} & x_{ij}^{bc} - \sqrt{3}r_{ij}^{bc} & -2x_{ij}^{cc} \end{bmatrix}$$

The probabilistic OPF model may comprise the following fourth set of constraints, which represent load constraints, and ensures that the solution to the OPF model can supply the load demand within the range, defined by the minimum value of the load that must be supplied and the maximum forecasted value of the load:

Constraint (10):

$$\underline{P}_{i,t,s}^D \leq P_{i,t,s}^D \leq \bar{P}_{i,t,s}^D, \forall i \in N, \forall t \in T, \forall s \in \Omega$$

wherein $\underline{P}_{i,t,s}^D$ is the minimum value (e.g., in kW) of real power that must be supplied to node $i$ in time interval $t$ for scenario $s$, and $\bar{P}_{i,t,s}^D$ is the maximum forecasted value (e.g., in kW) of reactive power load at node $i$ in time interval $t$ for scenario $s$.

Constraint (11):

$$\underline{Q}_{i,t,s}^D \leq Q_{i,t,s}^D \leq \bar{Q}_{i,t,s}^D, \forall i \in N, \forall t \in T, \forall s \in \Omega$$

wherein $\underline{Q}_{i,t,s}^{D}$ is the minimum value (e.g., in kAVr) of reactive power that must be supplied to node $i$ in time interval $t$ for

scenario $s$, and $\bar{Q}_{i,t,s}^{D}$ is the maximum forecasted value (e.g., in kAVr) of reactive power load at node $i$ in time interval $t$ for scenario $s$.

Notably, the maximum forecasted value of the load can vary for different scenarios in the set of scenarios $\Omega$. Thus, the probabilistic OPF model may also account for uncertainty in the load forecasts.

The probabilistic OPF model, described above, can be used to produce a resiliency measure of load curtailment. In particular, a plurality of scenarios may be acquired in subprocess 410 and provided in the input data to probabilistic optimization model 360, comprising the probabilistic OPF model. For example, the asset data may comprise the failure probability or failure probability distributions for the plurality of assets, and a plurality of failure scenarios may be generated based on these failure probabilities or failure probability distributions. Alternatively, the failure scenarios may be pre-generated and provided in the asset data or other data that is acquired in subprocess 410.

Regardless of how the plurality of failure scenarios is acquired, the probabilistic OPF model may be applied to the scenarios, in order to obtain the optimal (e.g., maximum) value of expected load supply across all of the scenarios during the future event. If this optimal value is less than the expected load during the future event, then there is likely to be a shortfall in load during the future event. Accordingly, the resiliency measure of load curtailment may be output as one of the plurality of resiliency measures that is to be proposed for the improvement of operational resilience during the future event. The value of the load curtailment that is proposed (e.g., the amount of power to be curtailed) may be determined as or based on the difference between the optimal value of load supply, computed by the probabilistic OPF model, and the expected load during the future event.

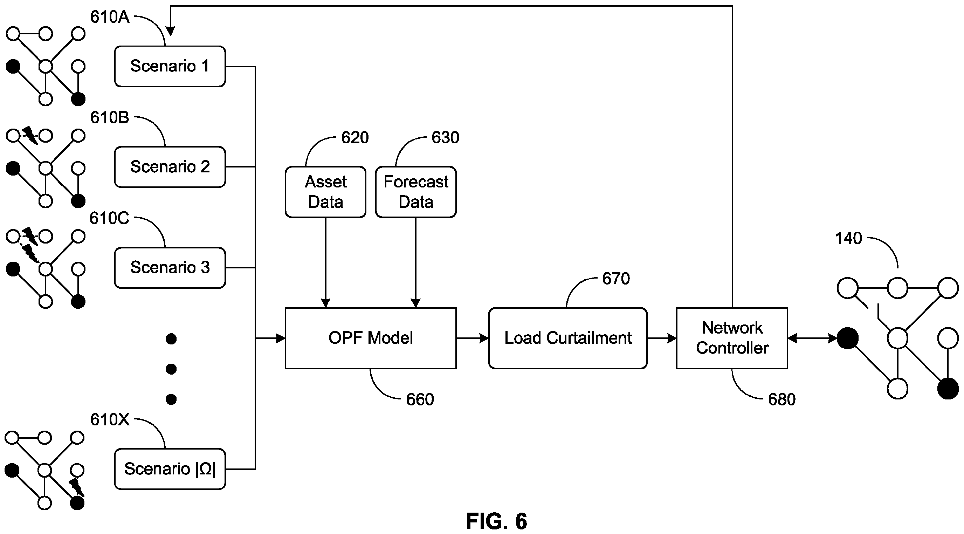

FIG. 6 illustrates an architecture for probabilistic optimization of load curtailment, according to an embodiment that utilizes load curtailment as a resiliency measure. In the illustrated embodiment, a plurality of scenarios 610, illustrated as scenarios 610A, 610B, 610C,..., 610X, representing the set of scenarios $\Omega$, is generated (e.g., by analysis and control module 330). Each scenario 610 may indicate the status of at least a subset of the plurality of assets in target system 140. For example, a scenario 610 may indicate the potential status (e.g., operational or failed) of each power line in the power system (e.g., power network) of target system 140 during the future event.

The plurality of scenarios 610 is input to an OPF model 660 of probabilistic optimization model 360, along with asset data 620 and forecast data 630. It should be understood that the use of the plurality of scenarios 610 accounts for the uncertainty in forecast data 630, and enables OPF model 660 to be probabilistic. Each of the plurality of scenarios 610 may be associated with a respective probability that the scenario 610 will occur, such that OPF model 660 accounts for the probabilities of occurrence of the plurality of scenarios 610. In an alternative embodiment, the failure probability distribution for each of one or more of the assets may be input to OPF model 660 instead of, or in addition to, the plurality of scenarios 610.

The decisions to be made by OPF model 660 are made relative to the current state of target system 140, which may be a distribution network. The output of OPF model 660 is a load curtailment 670. In an embodiment, load curtailment 670 identifies one or more electrical loads to be curtailed, for example, by turning off the electrical load or otherwise reducing power consumption by the electrical load. In other words, load curtailment 670 may indicate the amount of power to be curtailed by one or more electrical loads in the network of target system 140. It should be understood that load curtailment 670 may be determined by OPF model 660 based on the plurality of scenarios 610, such that load curtailment 670 accounts for the probabilities that assets (e.g., power lines) in target system 140 fail as a result of the future event.

Load curtailment 670 may be output to a network controller 680 that manages target system 140. Network controller 680 may be implemented as a system 200, that implements control module 320. In advance of the future event and/or during the future event, network controller 680 may reconfigure target system 140 to reflect load curtailment 670, and receive feedback from target system 140 reflecting the current state of target system 140. Network controller 680 may provide the feedback, comprising or consisting of the current state of target system 140, to a module (e.g., analysis control module 330) that generates a plurality of scenarios 610 based on the current state of target system 140. As discussed above, this may include scenarios 610 indicating the potential status (e.g., operational or failed) of assets (e.g., power lines) in the power system (e.g., power network) of target system 140 during a future event.

## 6.2. Network Topology Optimization

Network topology optimization may utilize the same probabilistic OPF model as described above with respect to load curtailment. The underlying goal of network topology optimization is to, given the scenarios in the set of scenarios $\Omega$, optimize the network topology of target system 140, such that the power flow on power lines with a high likelihood of failure is minimized, while simultaneously maximizing the load supply. This hardens target system 140 against the future event by minimizing the impact of the failure of power lines, having the highest likelihood of failure, on the operation of target system 140 during the event.

In order to provide network topology optimization as a resiliency measure, variables and constraints, related to the operations of switches in target system 140, may be added to the probabilistic OPF model described above. These switches can be interpreted as network branches, and therefore, the set of switches may be denoted by $E_{sw}$.

The following fifth set of constraints, which represent branch flow limits, may be added to the probabilistic OPF model:

Constraint (12):

$$-x_{ij}\bar{P}_{ij} \leq P_{ij,t,s} \leq x_{ij}\bar{P}_{ij}, \forall ij \in E_{sw}, \forall t \in T, \forall s \in \Omega$$

Constraint (13):

$$-x_{ij}\bar{Q}_{ij} \leq Q_{ij,t,s} \leq x_{ij}\bar{Q}_{ij}, \forall ij \in E_{sw}, \forall t \in T, \forall s \in \Omega$$

wherein $x_{ij}$ is a binary value indicating whether the status of the switch connecting node $i$ and node $j$ is open or closed (e.g., a value of one meaning the switch is closed, and a value of zero meaning the switch is open).

Notably, the values of $x_{ij}, \forall ij \in E_{sw}$, after optimization, represent the optimized network topology of target system 140. Since these switch status decisions do not vary based on the scenario being considered, the switch status variables $x_{ij}$ do not have scenario indices.

In addition, the following sixth set of constraints, which represent additional voltage constraints for nodes that are connected by switches, may be added to the probabilistic OPF model:

Constraint (14):

$$V_{i,t,s} = V_{j,t,s} - A_{ij}P_{ij,t,s} - B_{ij}Q_{ij,t,s} + \epsilon_{ij,s}, \forall ij \in E_{sw}, \forall i \in N, \forall t \in T, \forall s \in \Omega$$

Constraint (15):

$$-(1 - x_{ij})\underline{V}^2 \leq \epsilon_{ij,s} \leq (1 - x_{ij})\bar{V}^2, \forall ij \in E_{sw}, \forall t \in T, \forall s \in \Omega$$

wherein $\varepsilon_{ij,s}$ is a slack variable that captures the voltage difference between node $i$ and node $j$ for scenario $s$. The slack variable $\varepsilon_{ij,s}$ is added to ensure that Constraint (14) is not violated with the switch on edge $(i, j)$ being open. Constraint (15) ensures that, when the switch on edge $(i, j)$ is closed (i.e., $x_{ij}$ = 1), then $\varepsilon_{ij}$ = 0, and the relationship between $V_i$ and $V_j$ is maintained. However, if the switch on edge $(i, j)$ is open (i.e., $x_{ij}$ = 0), then there is no need to maintain the relationship between $V_i$ and $V_j$.

When the network topology is optimized, there is the possibility that the final network topology may contain network loops. However, distribution networks are typically operated in a radial fashion from a power source to the individual consumers (i.e., without network loops). Thus, to ensure that the network topology maintains a radial structure and does not contain loops, one or more radiality constraints may be added to the probabilistic OPF model. In an approach based on graph theory, two conditions must be satisfied to maintain a radial network: (i) the total number of power lines must be equal to the total number of nodes minus the total number of substations; and (ii) the network must remain fully connected.

To incorporate the above conditions and ensure radiality of the optimized network topology, the following seventh set of constraints may be added to the probabilistic OPF model:

Constraint (16):

$$\sum_{ij \in E_{sw}} x_{ij} + |E_s| = |N| - |N_{Sub}|$$

Constraint (17):

$$\underline{P}^D_{i,t,s} > 0$$

Constraint (18):

$$\underline{Q}^{D}_{i,t,s} > 0$$

In an alternative embodiment in which the utility allows loops (e.g., meshed operation), this seventh set of constraints may be omitted.

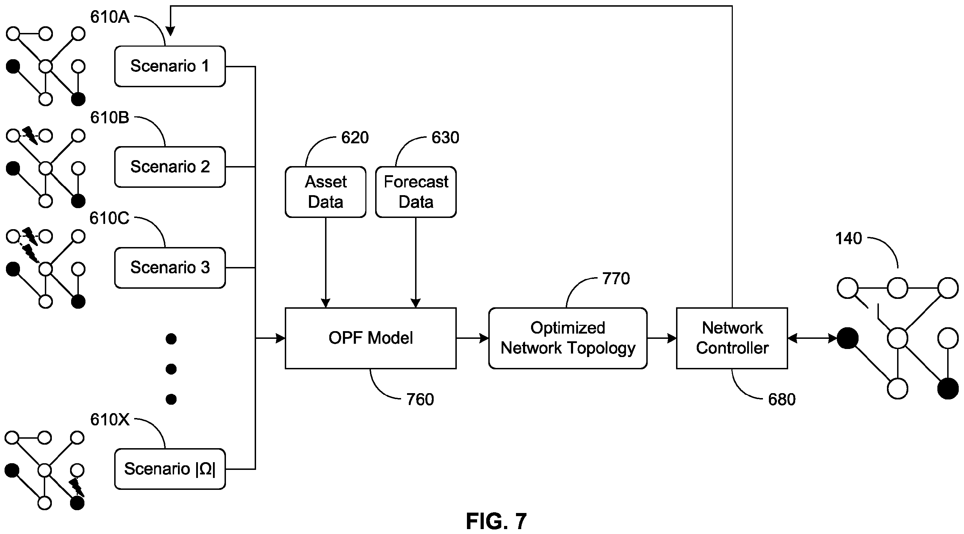

FIG. 7 illustrates an architecture for probabilistic optimization of network topology, according to an embodiment that utilizes network topology optimization as a resiliency measure. In the illustrated embodiment, a plurality of scenarios 610, illustrated as scenarios 610A, 610B, 610C,..., 610X, representing the set of scenarios $\Omega$, is generated (e.g., by analysis and control module 330). These may be the same scenarios 610 as described elsewhere, and therefore, any description of scenarios 610 in other contexts applies equally to scenarios 610 in this context, and vice versa.

The plurality of scenarios 610 is input to an OPF model 760 of probabilistic optimization model 360, along with asset data 620 and forecast data 630. It should be understood that the use of the plurality of scenarios 610 accounts for the uncertainty in forecast data 630, and enables OPF model 760 to be probabilistic. Each of the plurality of scenarios 610 may be associated with a respective probability that the scenario 610 will occur, such that OPF model 760 accounts for the probabilities of occurrence of the plurality of scenarios 610. In an alternative embodiment, the failure probability distribution for each of one or more of the assets may be input to OPF model 760 instead of, or in addition to, the plurality of scenarios 610.

The decisions to be made by OPF model 760 are made relative to the current state of target system 140, which may be a distribution network. The radiality constraints (e.g., Equations (16)-(18)) should be satisfied by the current state of target system 140. Thus, to ensure that the radiality constraints are satisfied, one of scenarios 610, illustrated as scenario 610A, may match the current state of target system 140. The radiality constraints only need to be added to OPF model 760 for this one scenario 610A that represents the current state of target system 140. This is sufficient, because, if the network of target system 140 is radial for the current state, the network will remain radial after the removal of any failed asset (e.g., power line).

The output of OPF model 760 is an optimized network topology 770. In an embodiment, optimized network topology 770 comprises an optimized switch status for target system 140. In other words, optimized network topology 770 may indicate the status (e.g., open or closed) for each switch in the network of target system 140. It should be understood that optimized network topology 770 may be determined by OPF model 760 based on the plurality of scenarios 610, such that optimized network topology 770 accounts for the probabilities that assets (e.g., power lines) in target system 140 fail as a result of the future event.

Optimized network topology 770 may be output to a network controller 680 that manages target system 140. Network controller 680 may be implemented as a system 200, that implements control module 320. In advance of the future event and/or during the future event, network controller 680 may reconfigure target system 140 to reflect optimized network topology 770, and receive feedback from target system 140 reflecting the current state of target system 140. Network controller 680 may provide the feedback, comprising or consisting of the current state of target system 140, to a module (e.g., analysis control module 330) that generates a plurality of scenarios 610 based on the current state of target system 140. As discussed above, this may include a scenario 610A that represents the current state of target system 140 and to which the radiality constraints are applied, as well as other scenarios 610 indicating the potential status (e.g., operational or failed) of assets (e.g., power lines) in the power system (e.g., power network) of target system 140 during a future event.

While network topology optimization is a significant tool for hardening target system 140 against the impacts of an event, it may not be practical to keep changing the network topology every few minutes during the event, due to physical limitations in target system 140 and/or computing resource limitations in management system 110. Accordingly, in an embodiment, decisions on updates to the network topology may be made at a feasible time resolution (e.g., every N hours), which may be set by the operator. In this case, upon the expiration of each of a plurality of time intervals, a plurality of scenarios 610 may be generated, based on the current status of target system 140, and OPF model 760 may be applied to the plurality of scenarios 610, along with asset data 620 (e.g., which may represent current asset information) and/or forecast data 630 (e.g., which may represent a forecast for one or more subsequent time intervals), to determine a new optimized network topology 770, which may then be used by network controller 680 to reconfigure target system 140. The process may be repeated for each of the plurality of time intervals until the event has ended and the post-event (e.g., restoration) phase has begun.

The time interval that is used may be set by the operator of target system 140. As an example, the time interval may be six hours. Thus, for an 18-hour event, a first iteration of probabilistic optimization of the network topology, for the first six-hour period of the event, may be performed before the event begins, and network controller 680 may reconfigure target system 140 at the start of the first six-hour period. A second iteration of probabilistic optimization of the network topology, for the second six-hour period of the event, may be performed before the first six-hour period of the event has passed, and network controller 680 may reconfigure target system 140 at the start of the second six-hour period. A third iteration of probabilistic optimization of the network topology, for the third six-hour period of the event, may be performed before the second six-hour period of the event has passed, and network controller 680 may reconfigure target system 140 at the start of the third six-hour period. Finally, after the third six-hour period ends, the post-event phase may begin, and the probabilistic optimization of the network topology may end or continue, depending on the implementation.

6.3. Preemptive Electrical Islanding

Preemptive electrical islanding partitions target system 140 (e.g., a power system, such as a distribution network) into a plurality of electrical islands in advance of the future event. It should be understood that an electrical island is a portion of a power system, including generation, network, and load, for which all network connections to other portions of the power system have been disconnected. Thus, each of the plurality of electrical islands may have independent grid-forming power-generating resources.

The underlying concept of preemptive electrical islanding is to convert the power system into a plurality of self-sustaining microgrids, to ensure continued operation during the future event. The benefits of preemptive electrical islanding may include, for example, limiting the impact of damage to network asset(s) to a small electrical island so that the damage does not affect the entire network, eliminating the reliance on network assets that have a high likelihood of failure, reducing the degree of operational uncertainty caused by the event, and/or facilitating the post-event (e.g., restoration) phase. Preemptive electrical islanding may divide target system 140 into small islanded microgrids by creating microgrid(s) around existing grid-forming distributed energy resources, and/or creating microgrid(s) with mobile grid-forming distributed energy resources (e.g., with or without any existing grid-forming distributed energy resources).

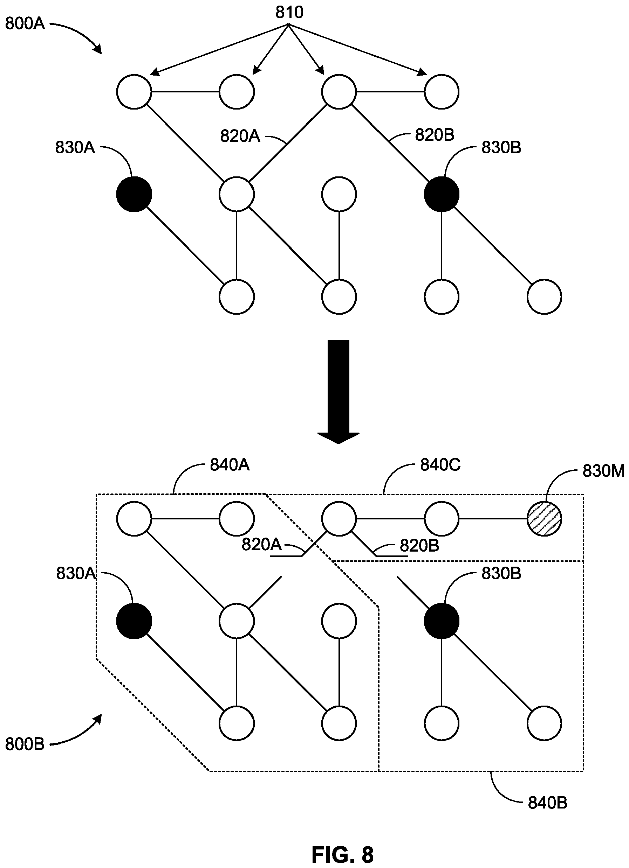

FIG. 8 illustrates an example of microgrid formation in preemptive electrical islanding, according to an embodiment. Originally, a target system 140 may have a first configuration 800A, in which there are no electrical islands. In first configuration 800A, the network may have a plurality of nodes 810, connected by a plurality of power lines 820. In the illustrated example, the plurality of nodes 810 comprises two existing grid-forming distributed energy resources 830A and 830B, which supply electrical power in target system 140.

In advance of or at the start of the future event, target system 140 may be reconfigured (e.g., by network controller 680, which may implement control module 320) from first configuration 800A to a second configuration 800B, based on preemptive electrical islands determined by a solution to probabilistic optimization model 360. In second configuration 800B, power lines 820A and 820B have been switched off to disconnect their respective nodes 810. In particular, switches on power lines 820A and 820B have been opened to disconnect the respective nodes 810 from each other. In addition, a mobile distributed energy resource 830M has been dispatched and placed. As a result, three electrical islands 840A, 840B, and 840C are formed. Electrical island 840A is supplied power by existing distributed energy resource 830A, electrical island 840B is supplied power by existing distributed energy resource 830B, and electrical island 840C is supplied power by the placed mobile distributed energy resource 830M.

A distributed energy resource 830 may be any asset that supplies power, such as a power generator that uses non-renewable and/or renewable resources, a battery energy storage system, and/or the like. Distributed energy resources 830 may be stationary or mobile. A stationary distributed energy resource 830 (e.g., 830A and 830B) is one that it is already present within the network during the determination of preemptive electrical islanding. A mobile distributed energy resource 830 (e.g., 830M) is capable of being moved from one location to another location. A battery energy storage system is especially useful as a mobile distributed energy resource 830. Thus, a mobile distributed energy resource 830 can be added to the network between the time at which preemptive electrical islanding is determined and any other time in advance of, at the start of, or during the future event.

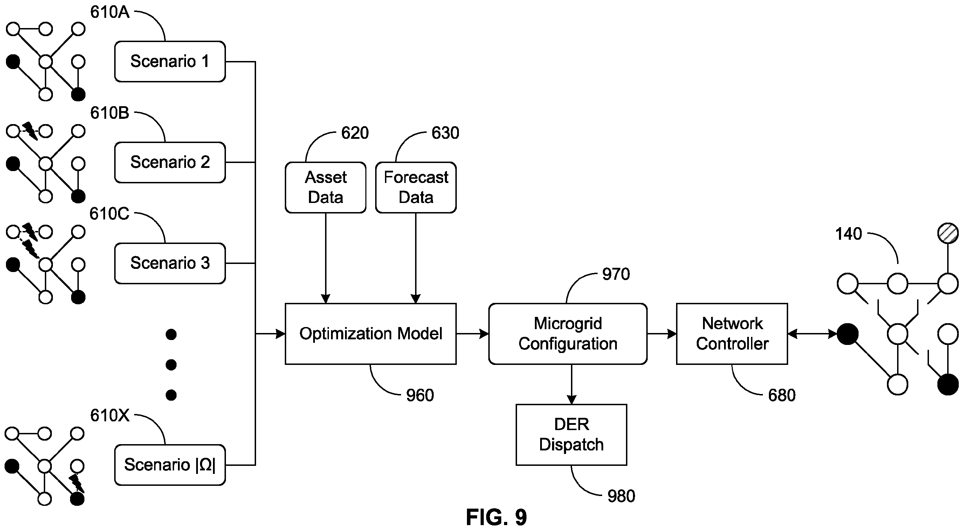

FIG. 9 illustrates an architecture for probabilistic preemptive electrical islanding, according to an embodiment that utilizes preemptive electrical islanding as a resiliency measure. In the illustrated embodiment, a plurality of scenarios 610, illustrated as scenarios 610A, 610B, 610C,..., 610X, representing a set of scenarios $\Omega$, is generated (e.g., by analysis and control module 330). These may be the same scenarios 610 as described elsewhere, and therefore, any description of scenarios 610 in other contexts applies equally to scenarios 610 in this context, and vice versa.

The plurality of scenarios 610 is input to an optimization model 960 of probabilistic optimization model 360, along with asset data 620 and forecast data 630. It should be understood that the use of the plurality of scenarios 610 accounts for the uncertainty in forecast data 630, and enables optimization model 960 to be probabilistic. Each of the plurality of scenarios 610 may be associated with a respective probability that the scenario 610 will occur, such that optimization model 960 accounts for the probability of occurrences of the plurality of scenarios 610. In an alternative embodiment, the failure probability distribution for each of one or more of the assets may be input to optimization model 960 instead of, or in addition to, the plurality of scenarios 610.

The goal of optimization model 960 is to optimally partition the network of target system 140 into a plurality of smaller microgrids, by minimizing the power flow on vulnerable lines and maximizing the total load that is supplied, subject to one or more constraints. The one or more constraints may comprise one or more, including potentially all of, the following: all microgrids must be radial; each microgrid is formed by opening or closing existing switches; each microgrid has a substantial number (e.g., threshold number) of nodes; the microgrid formation does not isolate any critical loads; if grid-forming distributed energy resources 830 exist in the power network, maximize the number of microgrids that contain at least one grid-forming distributed energy resource 830; and/or the number of microgrids that do not contain a grid-forming distributed energy resource 830 cannot exceed the number of available mobile distributed energy resources 830. Since each microgrid will be radial and is formed using existing switches, the microgrids will conform to the operating standards of the network without the preemptive electrical islanding.

The output of optimization model 960 is a microgrid configuration 970. In an embodiment, microgrid configuration 970 may identify each microgrid to be formed (e.g., as a set of node identifiers) and/or indicate the optimal status of each switch in the network. Microgrid configuration 970 may also define the amount of power that each distributed energy resource 830 is to absorb or inject during the future event, and/or identify one or more mobile distributed energy resources 830 to be dispatched and the location to which each mobile distributed energy resource 830 is to be dispatched. It should be understood that microgrid configuration 970 is determined by optimization model 960 based on the plurality of scenarios 610, such that microgrid configuration 970 accounts for the probabilities that assets (e.g., power lines) in target system 140 fail as a result of the future event.

Microgrid configuration 970 may be output to network controller 680. In advance of the future event and/or during the future event, network controller 680 may reconfigure target system 140 to reflect microgrid configuration 970. In particular, network controller 680 may update the physical switches (e.g., by opening or closing each of one or more switches) in target system 140 to reflect the statuses of the switches in microgrid configuration 970, to thereby form a plurality of microgrids in target system 140, as well as define setpoints for one or more distributed energy resources 830 within the resulting microgrids.

Partitioning a power network into microgrids enhances grid resiliency. However, there is a limit on the total number of microgrids into which the network can be split. There is also a high likelihood that microgrids form primarily towards the laterals of the network, while a majority of the network remains grid-connected. In these instances, there is synergy in combining preemptive electrical islanding with network topology optimization. In particular, each microgrid in microgrid configuration 970, as output by optimization model 960, may be provided in asset data 620 that are input to OPF model 760, to produce an optimized network topology 770 for each microgrid in microgrid configuration 970. In this case, network controller 680 may control target system 140 (e.g., control switches in target system 140) to form the plurality of microgrids in microgrid configuration 970 so as to have respective optimized network topologies 770. The combination of microgrid configuration 970 and optimized network topology 770 can boost the resiliency of every portion of the network.

In addition, microgrid configuration 970 may be input to a DER dispatch module 980. DER dispatch module 980 may dispatch one or more distributed energy resources 830 (e.g., define how much power each distributed energy resource 830 is to absorb and/or inject during the future event), and/or place one or more mobile distributed energy resources 830 into any microgrids to which mobile distributed energy resources 830 have been assigned in microgrid configuration 970.

6.4. Dispatching Distributed Energy Resources

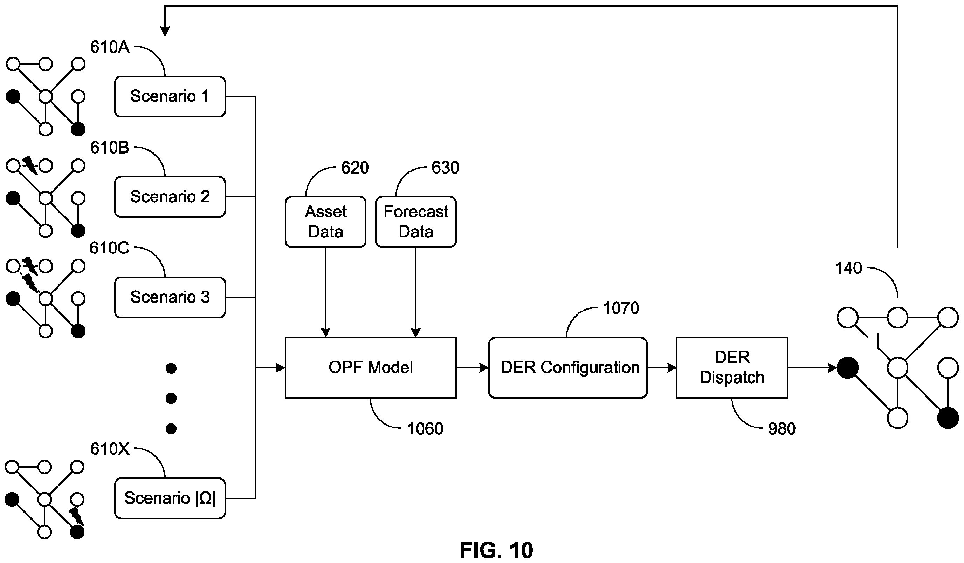

FIG. 10 illustrates an architecture for probabilistic DER dispatch, according to an embodiment that utilizes DER dispatch as a resiliency measure. In the illustrated embodiment, a plurality of scenarios 610, illustrated as scenarios 610A, 610B, 610C,..., 610X, representing a set of scenarios $\Omega$, is generated (e.g., by analysis and control module 330). These may be the same scenarios 610 as described elsewhere, and therefore, any description of scenarios 610 in other contexts applies equally to scenarios 610 in this context, and vice versa.

The plurality of scenarios 610 is input to an OPF model 1060 of probabilistic optimization model 360, along with asset data 620 and forecast data 630. It should be understood that the use of the plurality of scenarios 610 accounts for the uncertainty in forecast data 630, and enables OPF model 1060 to be probabilistic. Each of the plurality of scenarios 610 may be associated with a respective probability that the scenario 610 will occur, such that OPF model 1060 accounts for the probability of occurrences of the plurality of scenarios 610. In an alternative embodiment, the failure probability distribution for each of one or more of the assets may be input to OPF model 1060 instead of, or in addition to, the plurality of scenarios 610.

The goal of OPF model 1060 is to optimally add one or more mobile distributed energy resources 830 to one or more places in the network of target system 140, to thereby improve the resiliency of target system 140 during the event, subject to one or more constraints. The one or more constraints may comprise one or more, including potentially all of, the following: the number of mobile distributed energy resources 830 that are placed cannot exceed the number of available mobile distributed energy resources 830, limitations on where mobile distributed energy resources 830 can be placed; and/or the like.

The output of OPF model 1060 is a DER configuration 1070. In an embodiment, DER configuration 1070 may identify each distributed energy resource 830 to be dispatched within target system 140, as well as each mobile distributed energy resource 830 to be placed and the location at which that mobile distributed energy resource 830 is to be placed within target system 140. It should be understood that DER configuration 1070 is determined by OPF model 1060 based on the plurality of scenarios 610, such that DER configuration 1070 accounts for the probabilities that assets (e.g., power lines) in target system 140 fail as a result of the future event.

DER configuration 1070 may be input to a DER dispatch module 980. DER dispatch module 980 may dispatch one or more distributed energy resources 830 within target system 140, and/or place one or more mobile distributed energy resources 830 at locations identified in DER configuration 1070. It should be understood that DER configuration 1070 could be empty (e.g., in the event that OPF model 1060 does not predict the need for any DER dispatch), such that DER dispatch module 980 may not be used. By virtue of DER dispatch module 980, mobile distributed energy resources 830 may be physically dispatched and placed, according to DER configuration 1070, at prioritized locations in the network to ensure continuous load supply, support emergency power restoration, provide backup power, provide black start (i.e., restoring electrical power to a portion of the network without relying on an external power source), support a microgrid (e.g., with preemptive electrical islanding), and/or the like.

Distributed energy resources 830, whether stationary or mobile, typically have limited resources, which are difficult to replenish during an extreme weather event. In addition, the movement of mobile distributed energy resources 830 is hindered by the high degree of uncertainty induced by an extreme weather event. Thus, in an embodiment, OPF model 1060 may operate in combination with DER dispatch module 980, during the event, to monitor outages in target system 140, and redispatch distributed energy resources 830 and/or move mobile distributed energy resources 830 to new locations within their respective vicinities based on observed outages. In particular, feedback from target system 140, reflecting the current state of target system 140, may be provided to a module (e.g., analysis and control module 330) that generates a plurality of scenarios 610 based on the current state of target system 140. The newly generated plurality of scenarios 610 may be input to OPF model 1060, along with asset data 620 and/or forecast data 630, to provide a new DER configuration 1070 that can be provided to DER dispatch module 980, which may redispatch distributed energy resources 830 based on the new DER configuration 1070 and/or move one or more mobile distributed energy resources 830 to new locations based on the new DER configuration 1070. This can ensure that the distributed energy resources 830 in the network optimally supply power to the loads for the entire duration of the event, while maintaining adequate operating reserves.

## 7. Experimental Results

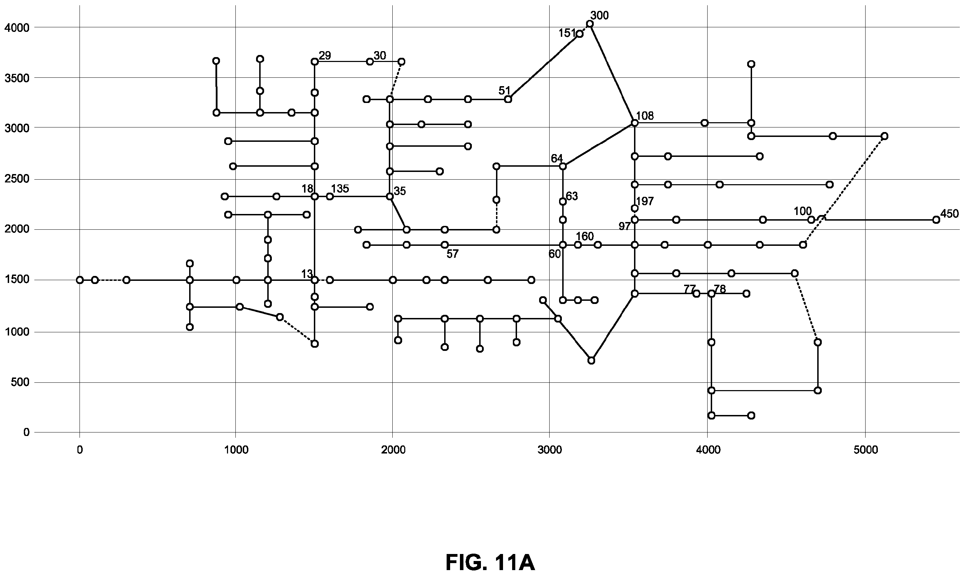

FIG. 11A illustrates a network plot of an IEEE 123-node distribution network feeder circuit that was used to test an exemplary implementation of disclosed embodiments, before network topology optimization. The network plot has been simplified to remove details that are not necessary to an understanding of the test. The circuit is characterized by overhead and underground power lines, as well as unbalanced loading. The circuit operated at a nominal voltage of 4.16kV and closely reflected voltage drop issues in the distribution network. The phase distribution of the power lines was not uniform, which contributed to phase imbalance, so as to mimic a real-world operating scenario. The circuit has eight pre-existing three-phase switches, with six additional single/three phase switches added, to demonstrate the capability of network topology optimization. In addition, the criticality of power lines was assigned based on graph theory. Lastly, the loads on the circuit were assigned different criticality levels to indicate the priority to be given to those loads. The criticality of loads was classified into three categories: low (e.g., residential homes, entertainment areas, etc.); medium (e.g., shelters, grocery stores, etc.); and high (e.g., hospitals, gas network pumps, water systems, etc.). It should be understood that the criticality of power lines and loads may be included in asset data 620.

Three equiprobable power-line-failure scenarios were considered as represented in the following table:

| Scenario ID | Failed Power Lines | Probability |
|---|---|---|
| 1 | None | 1/3 |
| 2 | [13, 18], [100, 450], [51, 151], [57, 60], [29, 30] | 1/3 |
| 3 | [63, 64], [57, 60], [77, 78], [135, 35] | 1/3 |

It should be understood that these scenarios correspond to scenarios 610. The first scenario does not contain any failed power lines and will utilize radiality constraints in OPF module 760. Each of the second and third scenarios includes a set of power-line failures that are highly likely to occur simultaneously. Notably, the power line connecting nodes 57 and 60, represented as [57, 60], appears in both of the second and third scenarios because this power line has a very high likelihood of failure, relative to other power lines.

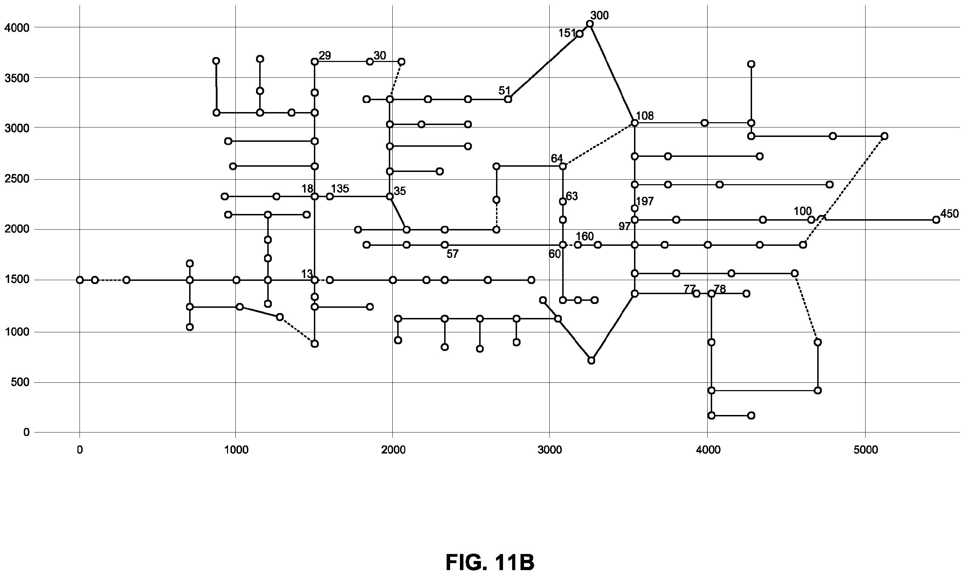

FIG. 11B illustrates a network plot of an IEEE 123-node distribution network feeder circuit that was used to test an exemplary implementation of disclosed embodiments, after network topology optimization. In the optimized network topology 770, output by OPF model 760, the statuses of four switches changed as depicted in the following table, while the remaining switches retained their statuses:

| Network Switch | Pre-Optimized Status | Optimized Status |
|---|---|---|
| 64-108 | closed | open |
| 60-160 | closed | open |
| 97-197 | open | closed |
| 151-300 | open | closed |

As a result of the changes in the statuses of these switches, the topology of the network has been optimized to reduce the power flow on the power line connecting node 57 and node 60, which has a very high likelihood of failure. In particular, the opening of switches 64-108 and 60-160 and the closing of switches 97-197 and 151-300 results in a shift of power flow away from power line [57, 60]. The real power flow on vulnerable power line [57, 60] was reduced by approximately 77%. Thus, in the event that the network topology optimization is implemented and power line [57, 60] fails during the event, only a small portion of the load will be isolated, relative to the case in which power line [57, 60] fails without the network topology optimization.

8. Example Application

While disclosed embodiments are agnostic (e.g., in terms of asset portfolio, loading type, geographical location, etc.) to the particular target system 140 and event (e.g., abnormal weather, normal weather, non-weather, etc.), it is generally contemplated that target system 140 would be a power network and the event would be an extreme weather event. The power network may be any type of distribution network, including a three-phase balanced distribution network or a three-phase unbalanced distribution network, or could alternatively be a transmission network. Disclosed embodiments enable proactive resiliency measures to be implemented, prior to the weather event, to thereby improve the operational resilience of the power network in advance of the weather event. This may, in turn, reduce the downtime (e.g., power outages) of the power network during the weather event.

In particular, disclosed embodiments simulate probabilistic scenarios 610, for a future event, which incorporate the uncertainty of asset failures (e.g., power line failures) within the power network during the weather event, using a probabilistic optimization model 360 that is uncertainty-aware. Because embodiments are probabilistic in nature, their performances are not impacted by the increased uncertainty stemming from extreme weather events. It should be understood that embodiments may also be used with weather or non-weather events having less uncertainty. In general, less uncertainty will improve the accuracy of probabilistic optimization model 760, which will improve the operational resilience of target system 140.

The simulations can be used to identify one or more resiliency measures and rank a plurality of resiliency measures in a recommended order of priority, according to a measure of effectiveness, which may be based on one or more key performance indicators and/or an ease of implementation. One or more of these resiliency measures may then be selected and implemented in the power network in advance of, at the start of, and/or during the weather event, to harden the power network to better absorb (e.g., fewer power outages) and/or recover (e.g., quicker power restoration) from the impact of damages caused by the weather event. These resiliency measure(s) may be selected manually (e.g., by an operator of the distribution network), automatically (e.g., by analysis and control module 330, network controller 680, etc.), and/or semi-automatically (e.g., automated recommendation of selection with manual approval or declination of the recommendation).

Regardless of how the resiliency measure(s) are selected, each resiliency measure may be implemented manually, automatically, or semi-automatically. In the automatic or semiautomatic case, when it is determined to implement a particular resiliency measure, network controller 680 (e.g., a system 200 that implements control module 320) may control the power network of target system 140 to implement the particular resiliency measure. For example, if it is determined to implement load curtailment, network controller 680 may control the power network to curtail power supplied to at least one load of the power network during the future event. If it is determined to implement optimized network topology, network controller 680 may control the power network to reconfigure the power network to optimized network topology 770, such that the power network has optimized network topology 770 during the future event. If it is determined to implement preemptive electrical islanding, network controller 680 may control the power network to reconfigure the power network to microgrid configuration 970 and, if necessary, dispatch one or more mobile distributed energy resources 830 (e.g., via DER dispatch module 980) or otherwise facilitate the dispatch of one or more mobile distributed energy resources 830. If it is determined to implement DER dispatch, network controller may dispatch one or more distributed energy resources 830, as well as dispatch one or more mobile distributed energy resources 830 (e.g., via DER dispatch module 980) or otherwise facilitate the dispatch of one or more mobile distributed energy resources 830.

Thus, disclosed embodiments may be used as a decision-making tool for an operator of target system 140. In particular, the operator may utilize process 400 to support proactive resiliency measures for boosting the operational resilience of target system 140, in advance of a future event. In addition, process 400 may continue to operate during the event, to provide updated recommendations and rankings of resiliency measures, using real-time input data collected during the event.

Additionally or alternatively, disclosed embodiments may be used as a planning tool to quantify the operational resilience of target system 140. In other words, process 400 may be executed, without consideration of any future event, to recommend and rank resiliency measures for boosting the overall operational resilience of target system 140. An operator of target system 140 may use this planning tool for short-term or long-term planning. For instance, the operator may use the ranked resiliency measures to prioritize investment in enhancement measures for target system 140.

The measure of effectiveness that is used to quantify the effectiveness of each resiliency measure may utilize intuitive and/or commonly used key performance indicators, such as critical load supply, the value of the lost load, average interruption duration index, and/or the like. The measures of effectiveness may be provided to the operator of target system 140 in an easy-to-read visual format (e.g., in one or more tables, graphs, charts, etc.), via human-to-machine interface 340. Thus, the operator does may not need any additional training to begin using the disclosed embodiments.

9. Example Embodiments

Disclosed embodiments may provide numerous advantages over the state of the art. It would be advantageous to achieve a proactive reduction in the physical and economic impact of extreme events on a power network. It would also be desirable to facilitate the selection of resiliency measures. To address one or more of these objectives, example embodiments include, without limitation:

Embodiment 1A: A method comprising using at least one hardware processor to: acquire asset data associated with a plurality of power-delivery assets of a power network; acquire forecast data associated with at least one future event; generate input data based on the asset data and the forecast data; and in advance of the at least one future event, input the input data to a probabilistic optimization model that optimizes at least one parameter of an operation of the power network for the at least one future event, for each of a plurality of resiliency measures, determine a measure of effectiveness of the resiliency measure, on the operation of the power network for the at least one future event, based on a solution to the probabilistic optimization model, and output the measures of effectiveness for the plurality of resiliency measures to a network controller of the power network.

Embodiment 2A: The method of Embodiment 1A, further comprising using the at least one hardware processor to, prior to outputting the measures of effectiveness, rank the plurality of resiliency measures according to the measures of effectiveness for the plurality of resiliency measures.

Embodiment 3A: The method of Embodiment 2A, wherein the measure of effectiveness for each of the plurality of resiliency measures is based on one or both: an expected improvement in the operation of the power network during the at least one future event if the resiliency measure is implemented; or an ease of implementing the resiliency measure.

Embodiment 4A: The method of any preceding Embodiment, wherein the probabilistic optimization model optimizes an objective function that computes expected load supply, and wherein the plurality of resiliency measures comprises load curtailment.

Embodiment 5A: The method of Embodiment 4A, wherein the asset data comprises criticality information that indicates a criticality of one or more loads of the power network, and wherein the objective function weights the one or more loads according to the criticality.

Embodiment 6A: The method of Embodiment 4A, further comprising using the at least one hardware processor to: determine to implement the load curtailment; and control the power network to curtail power supplied to at least one load of the power network during the at least one future event.

Embodiment 7A: The method of any preceding Embodiment, wherein the probabilistic optimization model models a topology of the power network, wherein the solution to the probabilistic optimization model comprises an optimized network topology, and wherein the plurality of resiliency measures comprises reconfiguring the power network to the optimized network topology.

Embodiment 8A: The method of Embodiment 7A, further comprising using the at least one hardware processor to: determine to implement the optimized network topology; and control the power network to reconfigure the power network to the optimized network topology, such that the power network has the optimized network topology during the at least one future event.

Embodiment 9A: The method of any preceding Embodiment, wherein the probabilistic optimization model models electrical islanding within the power network, wherein the solution to the probabilistic optimization model comprises one or more electrical islands within the power network, and wherein the plurality of resiliency measures comprises preemptive electrical islanding.

Embodiment 10A: The method of any preceding Embodiment, wherein the probabilistic optimization model models dispatch of energy resources within the power network, wherein the solution to the probabilistic optimization model comprises a dispatch of each of one or more energy resources within the power network, and wherein the plurality of resiliency measures comprises dispatching the one or more energy resources.

Embodiment 11 A: The method of any preceding Embodiment, wherein the asset data comprise one or more parameters of each of one or more of the plurality of power-delivery assets, and indicates connections between the plurality of power-delivery assets.

Embodiment 12A: The method of any preceding Embodiment, wherein the forecast data comprise a forecast of load on the power network during the at least one future event.

Embodiment 13A: The method of any preceding Embodiment, wherein the input data comprise a plurality of failure scenarios for the plurality of power-delivery assets during the at least one future event.

Embodiment 14A: The method of Embodiment 13A, wherein the asset data comprise failure probabilities for the plurality of power-delivery assets, and wherein the method further comprises using the at least one hardware processor to generate the plurality of failure scenarios based on the failure probabilities.

Embodiment 15A: The method of any preceding Embodiment, wherein the input data comprise a plurality of failure probability distributions for the plurality of power-delivery assets.

Embodiment 16A: The method of any preceding Embodiment, wherein the at least one future event comprises a weather event, and wherein the forecast data comprise a weather forecast for a time period of the at least one future event.

Embodiment 17A: The method of any preceding Embodiment, wherein the power network comprises a distribution network.

Embodiment 18A: The method of any preceding Embodiment, wherein the plurality of resiliency measures comprises load curtailment and network topology optimization.

Embodiment 1B: A method comprising using at least one hardware processor to: acquire asset data associated with a plurality of power-delivery assets of a power network; acquire forecast data associated with at least one future event; generate input data based on the asset data and the forecast data; and in advance of the at least one future event, input the input data to a probabilistic optimization model that optimizes at least one parameter of an operation of the power network for the at least one future event, for each of a plurality of resiliency measures, determine a measure of effectiveness of the resiliency measure, on the operation of the power network for the at least one future event, based on a solution to the probabilistic optimization model, and output the measures of effectiveness for the plurality of resiliency measures to a network controller of the power network, wherein the probabilistic optimization model optimizes an objective function that computes expected load supply, and wherein the plurality of resiliency measures comprises load curtailment.

Embodiment 2B: The method of Embodiment 1B, further comprising using the at least one hardware processor to: determine to implement the load curtailment; and control the power network to curtail power supplied to at least one load of the power network during the at least one future event.

Embodiment 3B: The method of either Embodiment 1B or 2B, wherein the asset data comprises criticality information that indicates a criticality of one or more loads of the power network, and wherein the objective function weights the one or more loads according to the criticality.

Embodiment 4B: The method of any one of Embodiments 1B through 3B, further comprising using the at least one hardware processor to, prior to outputting the measures of effectiveness, rank the plurality of resiliency measures according to the measures of effectiveness for the plurality of resiliency measures.

Embodiment 5B: The method of any one of Embodiments 1B through 4B, wherein the measure of effectiveness for each of the plurality of resiliency measures is based on one or both: an expected improvement in the operation of the power network during the at least one future event if the resiliency measure is implemented; or an ease of implementing the resiliency measure.

Embodiment 6B: The method of any one of Embodiments 1B through 5B, wherein the probabilistic optimization model models a topology of the power network, wherein the solution to the probabilistic optimization model comprises an optimized network topology, and wherein the plurality of resiliency measures comprises reconfiguring the power network to the optimized network topology.

Embodiment 7B: The method of Embodiment 6B, further comprising using the at least one hardware processor to: determine to implement the optimized network topology; and control the power network to reconfigure the power network to the optimized network topology, such that the power network has the optimized network topology during the at least one future event.

Embodiment 8B: The method of any one of Embodiments 1B through 7B, wherein the probabilistic optimization model models electrical islanding within the power network, wherein the solution to the probabilistic optimization model comprises one or more electrical islands within the power network, and wherein the plurality of resiliency measures comprises preemptive electrical islanding.

Embodiment 9B: The method of Embodiment 8B, wherein the solution to the probabilistic optimization model comprises a microgrid configuration that includes a plurality of microgrids that each has at least one grid-forming distributed energy resource, and wherein the method further comprises using the at least one hardware processor to: determine to implement the preemptive electrical islanding; and control one or more switches in the power network to split the power network into the plurality of microgrids.

Embodiment 10B: The method of any one of Embodiments 1B through 9B, wherein the probabilistic optimization model models dispatch of energy resources within the power network, wherein the solution to the probabilistic optimization model comprises a dispatch of each of one or more energy resources within the power network, and wherein the plurality of resiliency measures comprises dispatching the one or more energy resources.

Embodiment 11B: The method of Embodiment 10B, wherein the one or more energy resources comprise at least one mobile energy resource.

Embodiment 12B: The method of any one of Embodiments 1B through 11B, wherein the asset data comprise one or more parameters of each of one or more of the plurality of power-delivery assets, and indicates connections between the plurality of power-delivery assets.

Embodiment 13B: The method of any one of Embodiments 1B through 12B, wherein the forecast data comprise a forecast of load on the power network during the at least one future event.

Embodiment 14B: The method of any one of Embodiments 1B through 13B, wherein the input data comprise a plurality of failure scenarios for the plurality of power-delivery assets during the at least one future event.

Embodiment 15B: The method of Embodiment 14B, wherein the asset data comprise failure probabilities for the plurality of power-delivery assets, and wherein the method further comprises using the at least one hardware processor to generate the plurality of failure scenarios based on the failure probabilities.

Embodiment 16B: The method of any one of Embodiments 1B through 15B, wherein the input data comprise a plurality of failure probability distributions for the plurality of power-delivery assets.

Embodiment 17B: The method of any one of Embodiments 1B through 16B, wherein the at least one future event comprises a weather event, and wherein the forecast data comprise a weather forecast for a time period of the at least one future event.

Embodiment 18B: The method of any one of Embodiments 1B through 17B, wherein the power network comprises a distribution network.

Embodiment 1C: A method comprising using at least one hardware processor to: acquire asset data associated with a plurality of power-delivery assets of a power network; acquire forecast data associated with at least one future event; generate input data based on the asset data and the forecast data; and in advance of the at least one future event, input the input data to a probabilistic optimization model that optimizes at least one parameter of an operation of the power network for the at least one future event, for each of a plurality of resiliency measures, determine a measure of effectiveness of the resiliency measure, on the operation of the power network for the at least one future event, based on a solution to the probabilistic optimization model, and output the measures of effectiveness for the plurality of resiliency measures to a network controller of the power network, wherein the probabilistic optimization model models a topology of the power network, wherein the solution to the probabilistic optimization model comprises an optimized network topology, and wherein the plurality of resiliency measures comprises reconfiguring the power network to the optimized network topology.

Embodiment 2C: The method of Embodiment 1C, further comprising using the at least one hardware processor to: determine to implement the optimized network topology; and control the power network to reconfigure the power network to the optimized network topology, such that the power network has the optimized network topology during the at least one future event.

Embodiment 3C: The method of either Embodiment 1C or 2C, wherein controlling the power network comprises controlling one or more switches in the power network.

Embodiment 4C: The method of any one of Embodiments 1C through 3C, further comprising using the at least one hardware processor to, prior to outputting the measures of effectiveness, rank the plurality of resiliency measures according to the measures of effectiveness for the plurality of resiliency measures.

Embodiment 5C: The method of any one of Embodiments 1C through 4C, wherein the measure of effectiveness for each of the plurality of resiliency measures is based on one or both: an expected improvement in the operation of the power network during the at least one future event if the resiliency measure is implemented; or an ease of implementing the resiliency measure.

Embodiment 6C: The method of any one of Embodiments 1C through 5C, wherein the plurality of resiliency measures comprises load curtailment.

Embodiment 7C: The method of Embodiment 6C, wherein the asset data comprises criticality information that indicates a criticality of one or more loads of the power network.

Embodiment 8C: The method of Embodiment 6C, further comprising using the at least one hardware processor to: determine to implement the load curtailment; and control the power network to curtail power supplied to at least one load of the power network during the at least one future event.

Embodiment 9C: The method of any one of Embodiments 1C through 8C, wherein the probabilistic optimization model models electrical islanding within the power network, wherein the solution to the probabilistic optimization model comprises one or more electrical islands within the power network, and wherein the plurality of resiliency measures comprises preemptive electrical islanding.

Embodiment 10C: The method of Embodiment 9C, wherein the solution to the probabilistic optimization model comprises a microgrid configuration that includes a plurality of microgrids that each has at least one grid-forming distributed energy resource, and wherein the method further comprises using the at least one hardware processor to: determine to implement the preemptive electrical islanding; and control one or more switches in the power network to split the power network into the plurality of microgrids.

Embodiment 11C: The method of any one of Embodiments 1C through 10C, wherein the probabilistic optimization model models dispatch of energy resources within the power network, wherein the solution to the probabilistic optimization model comprises a dispatch of each of one or more energy resources within the power network, and wherein the plurality of resiliency measures comprises dispatching the one or more energy resources.

Embodiment 12C: The method of any one of Embodiments 1C through 11C, wherein the asset data comprise one or more parameters of each of one or more of the plurality of power-delivery assets, and indicates connections between the plurality of power-delivery assets.

Embodiment 13C: The method of any one of Embodiments 1C through 12C, wherein the forecast data comprise a forecast of load on the power network during the at least one future event.

Embodiment 14C: The method of any one of Embodiments 1C through 13C, wherein the input data comprise a plurality of failure scenarios for the plurality of power-delivery assets during the at least one future event.

Embodiment 15C: The method of Embodiment 14C, wherein the asset data comprise failure probabilities for the plurality of power-delivery assets, and wherein the method further comprises using the at least one hardware processor to generate the plurality of failure scenarios based on the failure probabilities.

Embodiment 16C: The method of any one of Embodiments 1C through 15C, wherein the input data comprise a plurality of failure probability distributions for the plurality of power-delivery assets.

Embodiment 17C: The method of any one of Embodiments 1C through 16C, wherein the at least one future event comprises a weather event, and wherein the forecast data comprise a weather forecast for a time period of the at least one future event.

Embodiment 18C: The method of any one of Embodiments 1C through 17C, wherein the power network comprises a distribution network.

Embodiment 19: A system comprising: at least one hardware processor; and software configured to, when executed by the at least one hardware processor, perform the method of any one of Embodiments 1A through 18C.

Embodiment 20: A non-transitory computer-readable medium having instructions stored thereon, wherein the instructions, when executed by a processor, cause the processor to perform the method of any one of Embodiments 1A through 18C.

The above description of the disclosed embodiments is provided to enable any person skilled in the art to make or use the invention. Various modifications to these embodiments will be readily apparent to those skilled in the art, and the general principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

As used herein, the terms "comprising," "comprise," and "comprises" are open-ended. For instance, "A comprises B" means that A may include either: (i) only B; or (ii) B in combination with one or a plurality, and potentially any number, of other components. In contrast, the terms "consisting of," "consist of," and "consists of" are closed-ended. For instance, "A consists of B" means that A only includes B with no other component in the same context.

Combinations, described herein, such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's.

**Claims**

1. A method comprising using at least one hardware processor to:

   acquire asset data associated with a plurality of power-delivery assets of a power network;
   acquire forecast data associated with at least one future event;
   generate input data based on the asset data and the forecast data; and
   in advance of the at least one future event,

   input the input data to a probabilistic optimization model that optimizes at least one parameter of an operation of the power network for the at least one future event,
   for each of a plurality of resiliency measures, determine a measure of effectiveness of the resiliency measure, on the operation of the power network for the at least one future event, based on a solution to the probabilistic optimization model, and
   output the measures of effectiveness for the plurality of resiliency measures to a network controller of the power network,
   wherein the probabilistic optimization model models a topology of the power network, wherein the solution to the probabilistic optimization model comprises an optimized network topology, and wherein the plurality of resiliency measures comprises reconfiguring the power network to the optimized network topology.

2. The method of Claim 1, further comprising using the at least one hardware processor to:

   determine to implement the optimized network topology; and
   control the power network to reconfigure the power network to the optimized network topology, such that the power network has the optimized network topology during the at least one future event.

3. The method of Claim 1 or 2, wherein controlling the power network comprises controlling one or more switches in the power network.

4. The method of any one of Claims 1 to 3, further comprising using the at least one hardware processor to, prior to outputting the measures of effectiveness, rank the plurality of resiliency measures according to the measures of effectiveness for the plurality of resiliency measures and/or
   wherein the measure of effectiveness for each of the plurality of resiliency measures is based on one or both:

   an expected improvement in the operation of the power network during the at least one future event if the resiliency measure is implemented; or
   an ease of implementing the resiliency measure.

5. The method of any one of Claims 1 to 4, wherein the plurality of resiliency measures comprises load curtailment, and preferably
   wherein the asset data comprises criticality information that indicates a criticality of one or more loads of the power network.

6. The method of Claim 5, further comprising using the at least one hardware processor to:

   determine to implement the load curtailment; and
   control the power network to curtail power supplied to at least one load of the power network during the at least one future event.

7. The method of any one of Claims 1 to 6, wherein the probabilistic optimization model models electrical islanding within the power network, wherein the solution to the probabilistic optimization model comprises one or more electrical islands within the power network, and wherein the plurality of resiliency measures comprises preemptive electrical islanding.

8. The method of Claim 7, wherein the solution to the probabilistic optimization model comprises a microgrid configuration that includes a plurality of microgrids that each has at least one grid-forming distributed energy resource, and wherein the method further comprises using the at least one hardware processor to:

determine to implement the preemptive electrical islanding; and

control one or more switches in the power network to split the power network into the plurality of microgrids.

9. The method of any one of Claims 1 to 8, wherein the probabilistic optimization model models dispatch of energy resources within the power network, wherein the solution to the probabilistic optimization model comprises a dispatch of each of one or more energy resources within the power network, and wherein the plurality of resiliency measures comprises dispatching the one or more energy resources.

10. The method of any one of Claims 1 to 9, wherein the asset data comprise one or more parameters of each of one or more of the plurality of power-delivery assets, and indicates connections between the plurality of power-delivery assets.

11. The method of any one of Claims 1 to 10, wherein the forecast data comprise a forecast of load on the power network during the at least one future event.

12. The method of any one of Claims 1 to 11, wherein the input data comprise a plurality of failure scenarios for the plurality of power-delivery assets during the at least one future event, and preferably
wherein the asset data comprise failure probabilities for the plurality of power-delivery assets, and wherein the method further comprises using the at least one hardware processor to generate the plurality of failure scenarios based on the failure probabilities.

13. The method of any one of Claims 1 to 12, wherein the input data comprise a plurality of failure probability distributions for the plurality of power-delivery assets and/or

wherein the at least one future event comprises a weather event, and wherein the forecast data comprise a weather forecast for a time period of the at least one future event and/or
wherein the power network comprises a distribution network.

14. A system comprising:

at least one hardware processor; and
software configured to, when executed by the at least one hardware processor,

acquire asset data associated with a plurality of power-delivery assets of a power network,
acquire forecast data associated with at least one future event,
generate input data based on the asset data and the forecast data, and
in advance of the at least one future event,

input the input data to a probabilistic optimization model that optimizes at least one parameter of an operation of the power network for the at least one future event,
for each of a plurality of resiliency measures, determine a measure of effectiveness of the resiliency measure, on the operation of the power network for the at least one future event, based on a solution to the probabilistic optimization model, and
output the measures of effectiveness for the plurality of resiliency measures to a network controller of the power network,
wherein the probabilistic optimization model models a topology of the power network, wherein the solution to the probabilistic optimization model comprises an optimized network topology, and wherein the plurality of resiliency measures comprises reconfiguring the power network to the optimized network topology.

15. A non-transitory computer-readable medium having instructions stored thereon, wherein the instructions, when executed by a processor, cause the processor to:

acquire asset data associated with a plurality of power-delivery assets of a power network;
acquire forecast data associated with at least one future event;
generate input data based on the asset data and the forecast data; and
in advance of the at least one future event,

input the input data to a probabilistic optimization model that optimizes at least one parameter of an operation of the power network for the at least one future event,

for each of a plurality of resiliency measures, determine a measure of effectiveness of the resiliency measure, on the operation of the power network for the at least one future event, based on a solution to the probabilistic optimization model, and

output the measures of effectiveness for the plurality of resiliency measures to a network controller of the power network,

wherein the probabilistic optimization model models a topology of the power network, wherein the solution to the probabilistic optimization model comprises an optimized network topology, and wherein the plurality of resiliency measures comprises reconfiguring the power network to the optimized network topology.

**FIG. 1**

**200**

Processor 210

Main Memory 215

I/O Interface 235

Communication Interface 240

Secondary Memory 220

Internal Medium 225

Removable Medium 230

255

250

External System 245

Baseband 260

Radio 265

Antenna 270

Communication Bus 205

**FIG. 2**

**FIG. 3**

**400**

FIG. 4

**FIG. 5**

**FIG. 6**

FIG. 7

**FIG. 8**

**FIG. 9**

FIG. 10

FIG. 11A

**FIG. 11B**

Europäisches
Patentamt

European
Patent Office

Office européen
des brevets

# EUROPEAN SEARCH REPORT

**Application Number**

EP 24 15 7298

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 404 067 B2 (UTOPUS INSIGHTS INC [US]) 3 September 2019 (2019-09-03) | 1-6, 9-11,14, 15 | INV. H02J3/00 H02J3/38 H02J13/00 |
| Y | * column 8, line 17 - line 54; figure 4 * <br> * column 14, line 3 - line 58 * <br> * column 15, line 26 - line 33 * <br> * column 16, line 19 - line 22; figure 9 * <br> * figure 8 * | 7,8,12, 13 | |
| Y | ABDELMALAK MICHAEL ET AL: "Enhancing Power System Operational Resilience Against Wildfires", IEEE TRANSACTIONS ON INDUSTRY APPLICATIONS, IEEE SERVICE CENTER, PISCATAWAY, NJ, US, vol. 58, no. 2, 25 January 2022 (2022-01-25), pages 1611-1621, XP011902965, ISSN: 0093-9994, DOI: 10.1109/TIA.2022.3145765 [retrieved on 2022-03-12] * Introduction * * sections II.C, III, III.A and III.B; equations 3-15; figures 1, 2 * * sections IV and IV.A; figures 1(a), 3; table 2 * * sections IV, IV.A, IV.B; figures 5,7 * | 7,8,12, 13 | |
| A | WO 2015/164292 A1 (SIEMENS AG [DE]; SIEMENS CORP [US]) 29 October 2015 (2015-10-29) * figure 1 * | 1,14,15 | |

**TECHNICAL FIELDS SEARCHED (IPC)**

H02J

The present search report has been drawn up for all claims

| Place of search | Date of completion of the search | Examiner |
|---|---|---|
| Munich | 26 July 2024 | Oiring, Vinicius |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 15 7298

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2024

| Patent document cited in search report | | Publication date | Patent family member(s) | | Publication date |
|---|---|---|---|---|---|
| US 10404067 | B2 | 03-09-2019 | US | 2017324243 A1 | 09-11-2017 |
| | | | US | 2019393700 A1 | 26-12-2019 |
| WO 2015164292 | A1 | 29-10-2015 | EP | 3134950 A1 | 01-03-2017 |
| | | | PT | 3134950 T | 27-06-2019 |
| | | | US | 2017040839 A1 | 09-02-2017 |
| | | | WO | 2015164292 A1 | 29-10-2015 |

EPO FORM P0459

For more details about this annex : see Official Journal of the European Patent Office, No. 12/82